# EUROPÄISCHE PATENTSCHRIFT

(11) **EP 2 055 447 B1**
(45) Veröffentlichungstag und Bekanntmachung des Hinweises auf die Patenterteilung: **29.02.2012**
(21) Anmeldenummer: 08021274.9
(22) Anmeldetag: 04.10.2005
(51) Int. Cl.: B25J 17/02

(54) **Parallelkinematische Vorrichtung**
Parallel cinematic device
Dispositif à cinématique parallèle

(30) Priorität: 11.10.2004 AT 16942004; 11.10.2004 AT 16952004; 12.10.2004 AT 17022004; 26.04.2005 AT 7012005; 19.05.2005 AT 8612005
(43) Veröffentlichungstag der Anmeldung: 06.05.2009
(62) Teilanmeldung aus: 05790667.9
(73) Patentinhaber: Ehrenleitner, Franz, 72213 Altensteig-Walddorf (DE)
(72) Erfinder: Ehrenleitner, Franz, 72213 Altensteig-Walddorf (DE)
(74) Vertreter: Barger, Werner

(56) Entgegenhaltungen:
- EP-A- 0 112 099
- SU-A1- 1 222 538
- THOMAS F ET AL: "Coordinate-free formulation of a 3-2-1 wire-based tracking device using Cayley-Menger determinants" PROCEEDINGS OF THE 2003 IEEE INTERNATIONAL CONFERENCE ON ROBOTICS AND AUTOMATION. ICRA 2003. TAIPEI, TAWAN, SEPT. 14 - 19, 2003; [PROCEEDINGS OF THE IEEE INTERNATIONAL CONFERENCE ON ROBOTICS AND AUTOMATION], NEW YORK, NY : IEEE, US, Bd. 1, 14. September 2003 (2003-09-14), Seiten 355-361, XP010666723 ISBN: 978-0-7803-7736-3

## Beschreibung

Die Erfindung betrifft mechanische parallelkinematische Vorrichtungen, die zumindest zwei zueinander entlang mehrerer Freiheitsgrade bewegliche feste Bauteile, eine feste Plattform und eine bewegliche Plattform, aufweisen, beispielsweise Hubtische, Hängebahnen, Hubroboter, Knickarmroboter, Bagger, Fräsen, Krane, Schneideinrichtungen, Messeinrichtungen, Handhabungsroboter, etc..

Die WO 03/059581 A betritt eine originelle Kinematik, die auf der Basis der Fußpunktverschiebung arbeitet, wobei verschiedene Kraftecke bzw. -scheren vorgesehen sind. Unter einem Krafteck sind zwei an einem gemeinsamen Punkt angreifende Stäbe bzw. Aktuatoren zu verstehen, unter Kraftschere bzw. kurz Schere ein Krafteck mit zumindest einem Aktuator. Bei dieser Druckschrift weisen die Kraftecke bzw. -scheren aber ihr Doppelgelenk nicht an der beweglichen Plattform auf, sondern an Aktuatoren, die die Fußpunktverschiebung bewirken. Diese Aktuatoren arbeiten im wesentlichen rotatorisch, sodass letztlich durch die besondere Ausbildung der Fußpunktverschiebung wieder ein serielles Element in die Kinematik eingebracht wird. Dies geht insbesondere aus einem Vergleich der Fig. 2 und 3 dieser Druckschrift hervor.

Für die Bewegung größerer Lasten bzw. das Übertragen größerer Kräfte ist aus dieser Druckschrift nichts Vorbildhaftes zu entnehmen, da die Umleitung der Kräfte zwischen den beweglichen Fußpunkten und den Aktuatoren, die diese Fußpunktbewegung durchführen, noch mehr zwischen den Hebeln, die die Fußpunktverschiebung besorgen und ihrer Haltestange extrem ungünstig ist. Auch für größere Arbeitsbereiche ist diese Vorrichtung nicht zu verwenden, da ihr relativer Platzbedarf (Verhältnis Platzbedarf/Arbeitsvolumen) sehr groß ist.

Vorteilhaft ist, dass die einzelnen Teile der Parallelkinematiken nur eine geringe mechanische Komplexität aufweisen und dass in vielen Fällen für alle oder zumindest eine Mehrzahl der abzudeckenden Freiheitsgrade identische Bauteile verwendet werden können, sodass der Aufbau der Parallelkinematiken an sich einfach und kostengünstig ist. Im Hinblick auf diesen einfachen und modularen Aufbau, aber auch für die anderen genannten Eigenschaften wird auf den sogenannten DELTA-Roboter, das Hexapod und den IRB 940 Tricept verwiesen.

Spezielle, einander ähnliche Parallelkinematiken sind aus der EP 112 099 A und der JP2003 172418 A bekannt. Beide sehen zwischen der festen und der beweglichen Plattform einen Stab fester Länge, der mit einer der beiden Plattformen fest verbunden und auf der anderen sphärisch gelagert ist, vor. Die Bewegungen werden mittels dreier (bei der EP-A zweier, durch passende Lagerung den 6.ten Freiheitsgrad beschränkende) Aktuatoren bewirkt. Es ist vorgesehen, mehrere derartige Gebilde hintereinander anzuordnen, sodass Zwischenplattformen entstehen. Beide Vorrichtungen lassen, auch in der aneinandergereihten Version nur geringe Bewegungen der jeweiligen beweglichen "Endplattform" zu.

Ausgehend von diesem Stand der Technik ist es Ziel der Erfindung, eine Parallelkinematik für die eingangs genannten Anwendungsgebiete zu schaffen, die auf der Kombination von Aktuatoren (durch Fusspunktverschiebung wirkende Stäbe konstanter Länge oder längenveränderliche Stäbe) und passiven Stäben beruht, wobei insbesondere die Probleme der komplexen Steuerung und der Lagerung vermieden oder zumindest deutlich reduziert werden soll.

Erfindungsgemäß geschieht dies durch eine kinematische Verbindung gemäß Anspruch 1, wobei in der kinematischen Kette zumindest an einer Stelle drei Stäbe mittelbar oder unmittelbar an einem Punkt, einem sogenannten Tripelpunkt, bzw. Pseudo-Tripelpunkt, angreifen bzw. enden. Dadurch sind die linearen Freiheitsgrade definiert, die mathematische Lösung der Steuerung wird geschlossen, damit gegenüber den offenen Lösungen gemäß dem Stand der Technik wesentlich, meist um den Faktor eintausend, vereinfacht, und ist beispielsweise über die Winkelfunktionen darstellbar. Dies ermöglicht auch auf einfache Weise eine "Vorsteuerung" der Bewegung. Darüber hinaus wird der Bewegungsablauf der kinematischen Ketten auch wesentlich anschaulicher und es können ohne komplexe Analysen die Fragen der Kollision der einzelnen Bauteile und des Auftretens von Singularitäten beurteilt werden.

Die Bezeichnung mittelbar oder unmittelbar wurde gewählt, da es für die praktische technische Ausführung völlig reicht, wenn einer (oder zwei) der drei Stäbe knapp am Ende eines der anderen beiden Stäbe angreift oder alle drei in unmittelbarer gegenseitiger Nachbarschaft an der Plattform angelenkt sind oder wenn andere Kombinationen der Möglichkeiten der Anordnung der Angriffspunkte vorliegen.

Dadurch wird zwar in einem Stab ein Biegemoment induziert, doch vereinfacht sich die praktische Ausführung des Lagers und es werden dessen mögliche Schwenkwinkel deutlich erhöht, ohne der Vereinfachung der Rechenarbeit oder der Grundlage der Erfindung, nämlich der Definition der linearen Freiheitsgrade, Abbruch zu tun. Bei Tripelpunkten kann je nach Bewegung des passend definierten Kraftecks entweder ein echter Doppelpunkt in Kombination mit einem Angriffspunkt des dritten Stabes in der Nähe des Doppelpunktes oder ein einfacher Angriffspunkt mit zwei in dessen Nähe am ersten Stab angreifenden Stäben ausgebildet sein. In Sonderfällen können auch zwei oder alle drei Stäbe in nächster Nähe an der beweglichen Plattform angreifen, dann kann zwar auf eine iterative Rechnung nicht gänzlich verzichtet werden, aber diese betrifft nur kleine Winkel/Wege und ist um Größenordnungen einfacher und schneller als im Stand der Technik.

Wenn diese mittelbare Ausführung bei Tripelpunkten im Bereich der festen Plattform verwendet wird, so gehen die mathematischen Vorteile teilweise verloren, da die Lage des Fußpunktes des so angebundenen Stabes sich mit der Lage des Stabes, an dem er angelenkt ist, ändert. Die mechanischen Vorteile, insbesondere das Lager betreffend, bleiben aber voll erhalten. Es kann gegebenenfalls nach der geschlossenen Lösung für den Tripelpunkt eine iterative Berechnung der exakten Endlage erfolgen, doch betrifft dies ausschließlich kurze Wege und ist daher auch iterativ ohne großen Aufwand und jedenfalls ohne die oben genannten Probleme möglich. Aus mechanischen Gründen ist es bevorzugt, dass der auf Biegung belastete Stab derjenige sein sollte, der nach Analyse des zugrunde liegenden Problems sich als der am geringsten belastete der gesamten kinematischen Vorrichtung, oft einfach "Kinematik" genannt, herausstellt.

Eine vorteilhafte Weiterbildung der Erfindung besteht darin, eine sogenannte überdefinierte bzw. überbestimmte Kinematik zu verwenden. Damit erreicht man eine Erhöhung der Steifigkeit der Vorrichtung, kann die bewegliche Plattform, was oft günstig ist, leichter und damit weniger steif bauen, weil sie durch die überbestimmte Fixierung stabilisiert wird und weil dies, zumindest in einem gewissem Ausmaß, notwendig ist, um die Toleranzen der überbestimmten Führung auszugleichen und so Beschädigungen der Lager bzw. der Aktuatoren (Antriebe, Getriebe und ausführende Organe in ihrer Gesamtheit) zu verhindern.

Eine weitere vorteilhafte Variante der Erfindung, die mit der vorstehend genannten nicht in Widerspruch steht, besteht darin, durch Lager für einzelne Stäbe, die keine allseitige Bewegung zulassen (Kardangelenk statt sphärischer Lagerung), Stäbe "einzusparen" und dafür Biegebeanspruchungen in Kauf zu nehmen. Diese zusätzliche mechanische Beanspruchung ist bei vielen Anwendungsgebieten, bei denen keine großen Kräfte auftreten, z.B. bei der Führung eines Laserkopfes zum Schneiden von Material, leicht zu beherrschen und reduziert den Aufwand und Platzbedarf nochmals.

Eine weitere Ausgestaltung der Erfindung besteht darin, nach der Festlegung der drei in einem Tripelpunkt zusammenlaufenden Stäbe die anderen drei notwendigen Stäbe gemäß den speziellen Systemanforderungen anzuordnen und auszuwählen. Besonders günstig ist es hier, ein weiteres Zeigerpaar bzw. Krafteck (zwei Stäbe, die in einem Punkt angreifen) und einen Einzelstab vorzusehen. Damit reduziert sich der für die Steuerung der Bewegung notwendige mathematischen Aufwand nochmals dramatisch und in mechanischer Hinsicht erlaubt eine solche Anordnung den Einsatz von Gleichlaufelementen, Führungen etc..

In der folgenden Beschreibung und den Ansprüchen wird zur besseren Lesbarkeit immer von einem "Tripelpunkt" gesprochen es sei denn, es wird speziell die nahe des Punktes angreifenden Variante, der sogenannte "Pseudo-Tripelpunkt" erläutert oder wenn die Unterschiede zwischen Tripelpunkt und Pseudo-Tripelpunkt eine erwähnenswerte Rolle spielen.

In einer Anzahl von Fällen können einzelne oder mehrere Stäbe und/oder Aktuatoren durch Zugmittel wie Seile, Ketten, Bänder, etc. ersetzt werden, dies ändert nichts an der Erfindung an sich. Es spielt auch in zahlreichen Anwendungsfällen keine Rolle, ob einzelne oder mehrere Aktuatoren als längenveränderliche Stäbe oder als Stäbe konstanter Länge, aber mit Fußpunktverschiebung (seltener Kopfpunktverschiebung, wegen des steigenden mathematischen Aufwandes) verwendet werden. Der Fachmann auf dem Gebiet der Parallelkinematik kann in Kenntnis der Erfindung die entsprechende Auswahl leicht vornehmen, in der Beschreibung und den Ansprüchen wird daher nicht näher darauf eingegangen.

Die Erfindung wird im folgenden anhand der Zeichnung näher erläutert. Dabei zeigt bzw. zeigen:
die Fig. 1-7 rein schematisch verschiedene Grundausbildungen der Erfindung,
die Fig. 8 einen Tripelpunkt,
die Fig. 9 eine vergrößerte Ansicht eines Details des Tripelpunktes der Fig. 8,
die Fig. 10 eine Variante eines Pseudotripelpunktes in einer Ansicht entsprechend der Ansicht der Fig. 8,
die Fig. 11 ein Detail der Fig. 10,
die Fig. 12-13 erfindungsgemäße Varianten von Hubtischen,
die Fig. 14-15 erfindungsgemäße Varianten einer Hängebahn,
die Fig. 16-22 eine Kinematik mit Knickarm in einem ersten Betriebsmodus,
die Zig. 23-26 die vorstehende Kinematik in einem zweiten Betriebsmodus,
die Fig. 27 eine erste Variante mit besonders ausgebildeter beweglicher Plattform,
die Fig. 28-29 einen ersten, erfindungsgemäßen Roboter,
die Fig. 30 eine Ausgestaltung des ersten Roboters,
die Fig. 31 eine Kombination der beiden Ausgestaltungen und
die Fig. 32-35 eine besonders torsionssteife Kinematik.

### Prinzipiell Erläuterung des Grundgedankens der Erfindung:

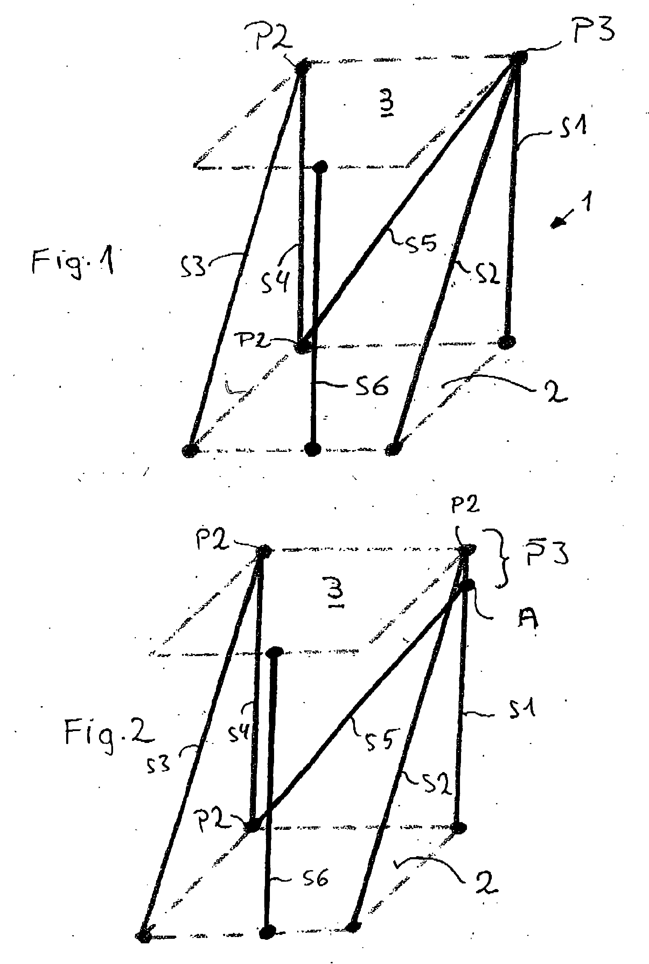

In Fig. 1 ist eine rein schematische Darstellung einer erfindungsgemäßen Parallelkinematik dargestellt, die in ihrer Gesamtheit mit 1 bezeichnet wird. Wie eingangs der Beschreibung erläutert, verbindet eine solche Kinematik eine feste Plattform 2 mit einer beweglichen Plattform 3, wobei, im Gegensatz zur seriellen Kinematik, keine Zwischenplattformen vorgesehen sind. Die Bezeichnung "feste Plattform" bedeutet nicht notwendigerweise, dass diese in einem Inertialsystem ruht, es wird durch diese Bezeichnung nur unterschieden, von welcher Plattform ausgehend die Bewegung innerhalb des betrachteten Systems erfolgt.

Auf diese Weise erreicht man es, dass die Gesamtkinematik bei der Parallelkinematik aus geschlossenen Ketten besteht, d.h. es gibt verschiedene geschlossene Systeme von Stäben, die auf einem Weg von einer Plattform zur anderen und auf einem anderen Weg wieder zurück von dieser anderen Plattform zur einen gehen. Dies ist, man denke nur an die Werkzeugführung einer Drehbank, bei der seriellen Kinematik völlig ausgeschlossen und mit ein Grund für die höhere Steifigkeit aber auch die komplexere Bewegungsmathematik der Parallelkinematiken. Erfindungsgemäß wird nun diese Komplexität, ohne auf die Vorteile der Parallelkinematik zu verzichten, dadurch drastisch verringert, dass zumindest ein Anlenkpunkt vorgesehen wird, von dem drei Stäbe ausgehen.

In Fig. 1 ist eine Parallelkinematik 1 dargestellt, bei der eine feste Plattform 2 mittels sechs Stäben S1 bis S6 mit einer beweglichen Plattform 3 verbunden ist. Diese Parallelkinematik 1 verfügt über einen sogenannten Tripelpunkt P3, er ist auf der beweglichen Plattform 3 vorgesehen. Durch das Ausbilden des dreifachen Punktes P3 wird aus den dort angelenkten Stäben S1, S2 und S5 ein Gebilde geschaffen das als "Zeigerpaar" oder "Krafteck" bezeichnet wird und über einen zusätzlichen Stab verfügt. De facto werden in diesem Punkt eigentlich drei Zeigerpaare gebildet, nämlich jeweils die Kombination S1-S2, S1-S5 und S2-S5. Im dargestellten Ausführungsbeispiel ist ein weiteres Zeigerpaar vorgesehen, das von den Stäben S3 und S4 gebildet wird, die beide im Punkt P2, der, so wie der Punkt P3, auf der beweglichen Plattform 3 angeordnet ist. Ein weiterer Doppelpunkt, P2' wird auf der festen Plattform 2 von den Stäben S4 und S5 ausgebildet.

Durch passende Anordnung der jeweils "anderen" Enden (Fußpunkte) der Stäbe S1, S4 bzw. S2, S3 bleiben diese beiden Zeigerpaare bei einer ganzen Reihe von in der Technik üblichen Anwendungen und Bewegungen stets zueinander in paralleler Lage und können daher auch einer gemeinsamen Bewegungsbeschreibung und somit Regelung unterworden werden.

Der letzte, einzeln, angeordnete Stab S6, der ohne Beschränkung der Allgemeinheit in der dargestellten Position normal zwischen den beiden Plattformen verläuft, bestimmt nun den letzten Freiheitsgrad und definiert die Lage der beweglichen Plattform 3 gegenüber der festen Plattform 2 endgültig.

Wenn man das so aufgebaute Gebilde nun von seiner Kinematik her betrachtet, so ergibt sich klar, dass durch die jeweilige Länge der Stäbe S1, S2 und S5 die Lage des Punktes P3 (immer, ohne dass es in der weiteren Beschreibung stets angeführt wird, gegenüber der festen Plattform 2, sei diese nun tatsächlich Teil eines Inertialsystems oder ihrerseits in einem solchen beweglich) eindeutig definiert ist, und dass die jeweilige Länge der anderen drei Stäbe S3, S4 und S6 die Winkellage der beweglichen Plattform definiert.

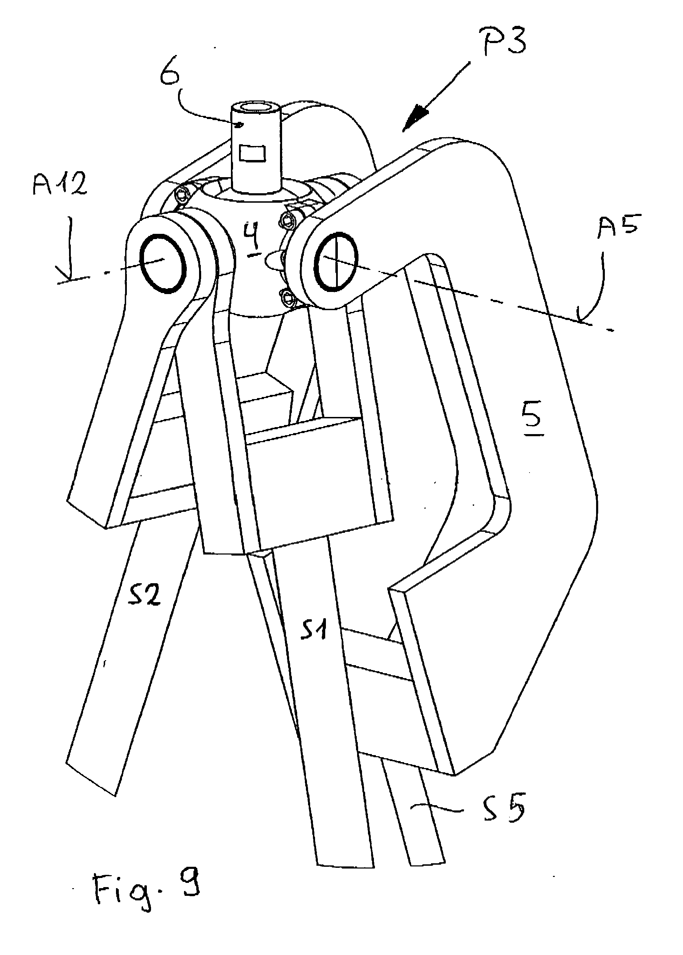

Da die praktische Ausbildung eines Lagers, in dem drei Stäbe sphärisch fixiert sein sollen, aufwendig ist (Fig. 9) und durch die notwendigen Lagerflächen die zulässigen Schwenkwinkel der drei Stäbe stark eingegrenzt sind, gibt es in der Praxis noch keine 3-2-1 Kinematik, die eingangs genannten theoretischen Abhandlungen fanden keinen Widerhall. Es ist für die technische Anwendbarkeit aber nach einem grundlegenden Aspekt der Erfindung ohne weiteres möglich und zulässig, und wird als mechanisch vollwertige Alternative angesehen, einen der drei Stäbe an einem anderen der drei Stäbe angreifen zu lassen (Alternativpunkt A), wie dies in Fig. 2 dargestellt ist.

Die mechanische Beanspruchung des Stabes, an dem der andere angreift (im dargestellten Ausführungsbeispiel der Stab S1), kann durch die in der Beschreibungseinleitung angegebenen Maßnahmen in zulässigen Grenzen gehalten werden, die mathematischen Vereinfachungen bleiben so gut wie zur Gänze erhalten und die Problematik der Lagerung der Stäbe an der Plattform wird völlig umgangen. In der Beschreibung und den Zeichnungen wird diese Ausbildung des Tripelpunktes P3 als Pseudotripelpunkt P'3 bezeichnet, auf die Unterschiede wird nur dort eingegangen, wo sie von Bedeutung sind oder im einzelnen erläutert werden.

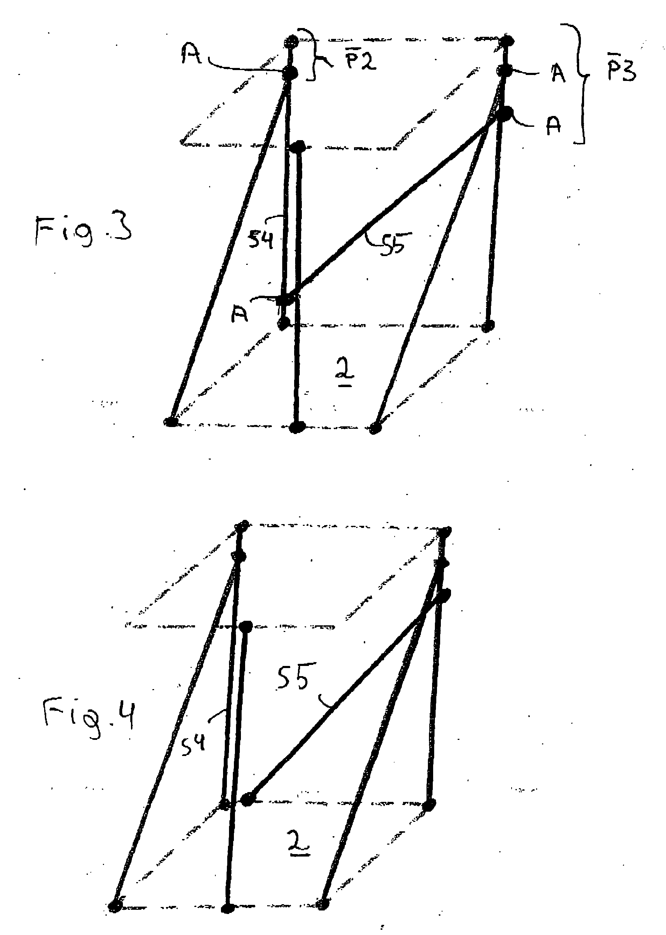

Die Fig. 3 zeigt eine weitergehende Ausgestaltung in der Richtung, wie sie zwischen der Fig. 1 und Fig. 2 vorgenommen wurde. Es wird bei dieser Variante auch eine Entbündelung der Doppelpunkte P2 auf völlig analoge Weise zur Entbündelung des Tripelpunktes P3 vorgenommen, der ja in der Variante der Fig. 2 zu einem Doppelpunkt P2 und einem Alternativpunkt A wurde. Dabei wurde auch der Doppelpunkt P2' der Stäbe S4 und S5 an der festen Plattform 2 entbündelt, auf die dadurch entstehenden mathematischen Probleme wurde bereits oben hingewiesen. Es besteht diese Konstruktion somit nur mehr aus den üblichen Befestigungspunkten, die an sich kein Bezugszeichen tragen, und den Alternativ-punkten A. Analog zur Änderung der Bezeichnung eines Tripelpunktes P3 zu P'3 wird eine Kombination eines solchen normalen Befestigungspunktes und eines Alternativpunktes als P'2 bezeichnet.

Von der Vereinfachung gegenüber der Parallelkinematik gemäß dem Stand der Technik her gesehen ist die Variante der Fig. 4 mit der Variante der Fig. 3 völlig gleichwertig, vom mathematischen Standpunkt aber vorteilhafter, da auch der Stab S5 einen festen Fußpunkt auf der festen Plattform 2 aufweist und daher mathematisch leichter zu beschreiben ist als bei einem beweglichen Fußpunkt gemäß der Fig. 3. Dabei wird der Befestigungspunkt des Stabs S5 an der festen Plattform 2 nicht wie bei Fig. 3 auf den Stab S4 verlegt, sondern als eigener Befestigungspunkt in die unmittelbare Nachbarschaft des Befestigungspunktes des Stabes S4. Damit bleiben alle mechanischen Vorteile gegenüber dem Stand der Technik gewahrt, auch die mathematischen Darstellung der Bewegung bleibt vereinfacht und voll erhalten, die Bezeichnung dieses Pseudodoppelpunktes als P'2 trägt dem Rechnung.

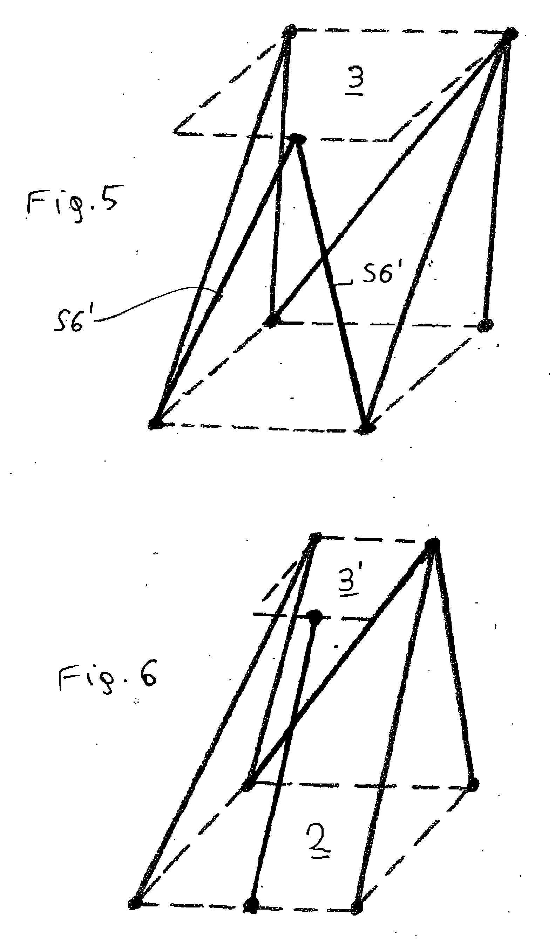

Eine Ausgestaltung, bei der die oben erwähnte Überbestimmung bzw. Redundanz des Systems verwendet wird, ist in Fig. 5 dargestellt. Damit kann im Falle des Versagens eines Teils der Struktur ein Zusammenbruch verhindert werden, was insbesondere in der Fördertechnik von eminenter Bedeutung ist, weiters erlaubt, ja verlangt diese Überbestimmung sogar, dass die bewegliche Plattform 3 nicht steifer ist, als es die Toleranzen der einzelnen kinematischen Elemente zulassen, ohne dass die gesamte Steifigkeit darunter leidet. Hier wird aus Gründen der Übersichtlichkeit wieder auf die ursprüngliche Darstellung mit Tripelpunkten und zweifachen Punkten zurückgegangen, ohne darauf beschränkt zu sein, denn selbstverständlich sind auch hier Pseudodoppelpunkte und Pseudotripelpunkte mit den genannten Vorteilen einsetzbar. Wesentlich ist, dass der Stab S6 ersetzt worden ist durch zwei Stäbe S6', deren Längenänderung so synchronisiert sein muss, dass sie gemeinsam den einen Freiheitsgrad des ursprünglichen S6 nachbilden.

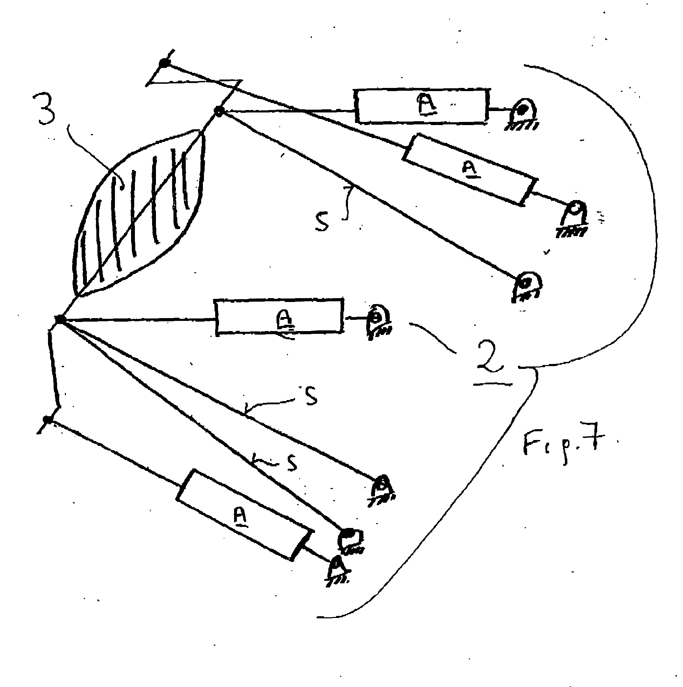

Die Fig. 6 zeigt eine ähnliche Situation wie die Fig. 1, nur dass die bewegliche Plattform 3' deutlich kleiner ausgebildet ist als die feste Plattform 2, wodurch die Lage der einzelnen Stäbe sich naturgemäß ebenfalls ändert. Selbstverständlich müssen die einzelnen Plattformen nicht viereckig und nicht einmal eben sein, wie aus Fig. 7 ersichtlich ist.

Die Fig. 7 zeigt in allgemeiner perspektivischer Darstellung eine Möglichkeit, durch eine Kombination längenveränderlicher Stäbe, angedeutet als hydraulische Zylinder-Kolben-Einheiten A mit Stäben konstanter Länge S, unter Heranziehung der erfindungsgemäßen Prinzipien eine erfindungsgemäße Parallelkinematik zu schaffen, bei der die Berechnung der Bewegungsgleichungen gegenüber dem Stand der Technik deutlich reduziert ist. Darüber hinaus ist es bei dieser Ausbildung der Kinematik möglich, die bewegliche Plattform 3 um 360° und darüber gegenüber der festen Plattform 2 (Summe aller Fußpunkte) zu drehen, was üblicherweise nicht möglich ist.

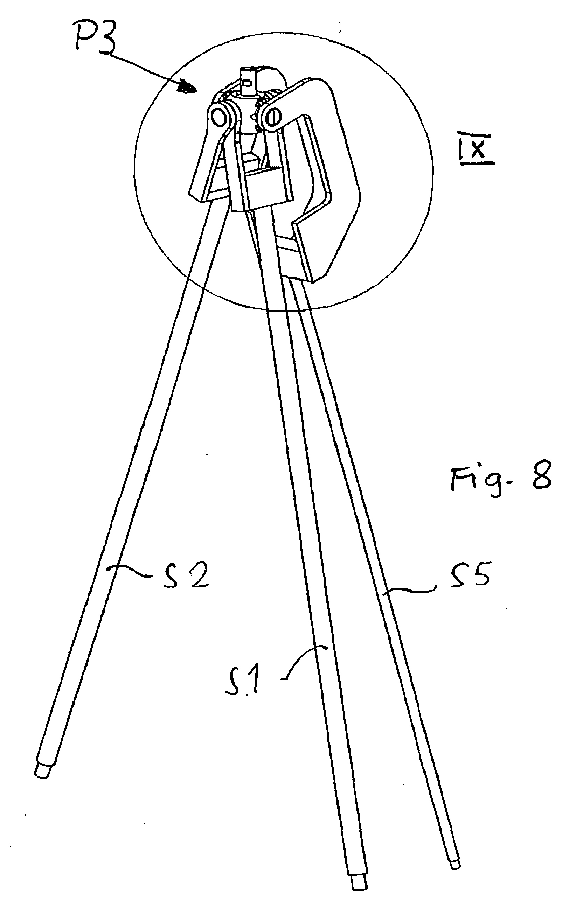

In Fig. 8 und 9 ist ein erfindungsgemäß ausgebildeter Tripelpunkt P3 zur näheren Erläuterung dieses erfindungswesentlichen Bauelementes in einer konstruktiven Ausgestaltung dargestellt. Die drei in ihm zusammenlaufenden Stäbe S1, S2, S5, analog zur Fig. 1 ausgewählt, sind auf die folgende Weise, die aus Fig. 9 deutlicher zu entnehmen ist, miteinander gekoppelt:
Die Stäbe S1 und S2 die, wie oben erläutert, ein sogenanntes Zeigerpaar oder Krafteck mit der Zeigerachse A12 bilden, greifen, um diese Zeigerachse schwenkbar, zu beiden Seiten einer Hohlkugel 4 an. Der Stab S5 greift über einen Bügel 5 an der Kugel 4 an einer zur Achse A12 normal angeordneten und sie schneidenden Achse A5 an. Der Schnittpunkt der Achsen A12 und A5 liegt im Mittelpunkt der Hohlkugel 4 und damit auch im Mittelpunkt des sphärischen Teils eines in der Hohlkugel 4 sphärisch drehbar gelagerten Zapfens 6, der mit der beweglichen Plattform 3 (nicht dargestellt) fest verbunden und damit ihr zuzurechnen ist.

Wie aus dieser Konstruktion ersichtlich ist, wird bei Änderung der Länge der Stäbe S1, S2 und S5 (oder bei Verschiebung von deren Fußpunkten [Fig. 8]) die räumliche Lage des Kugelmittelpunktes stets eindeutig definiert. Dabei ist der Bügel 5 um die Achse des Stabes S5 drehbar gelagert und die entsprechenden Bügel der Stäbe S1 und S2 sind um die Achsen dieser Stäbe drehbar gelagert (nur bei ganz speziellen Anordnungsfällen kann dies entfallen), um Verspannungen zu vermeiden.

Es ist leicht ersichtlich, dass die Ausbildung des Punktes P3 gemäß der Fig. 8 und 9 aufwendig ist und dabei doch den Nachteil aufweist, nur geringe Verschwenkungen um den Kugelmittelpunkt zuzulassen, ohne dass es zu Problemen mit aneinander schlagenden Bauteilen (Kollision) kommt.

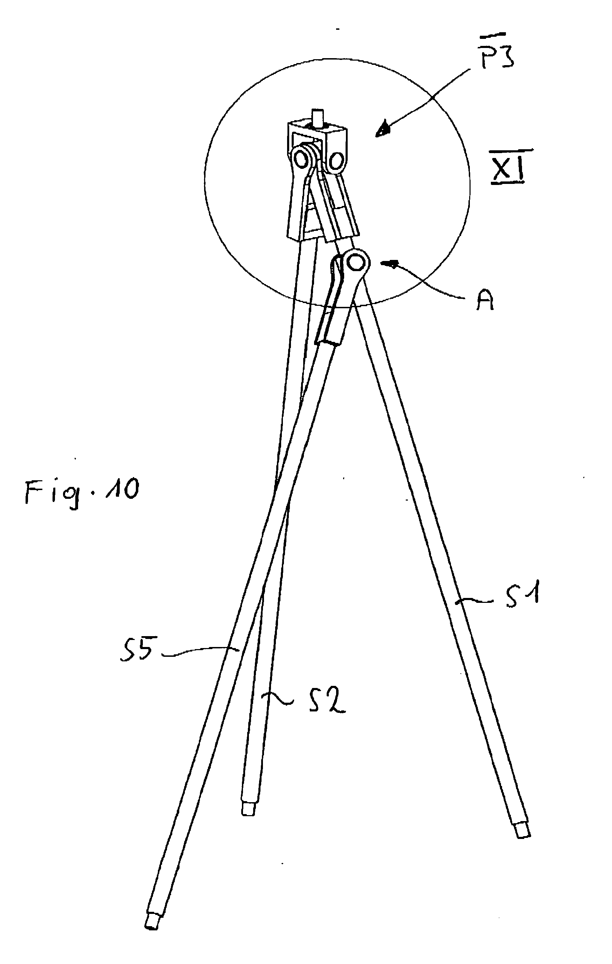

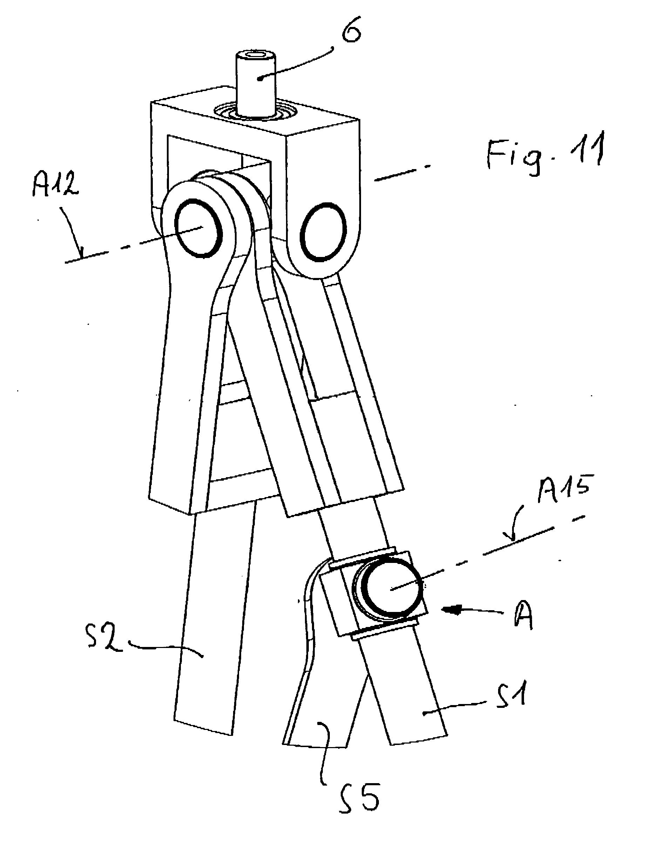

Die Fig. 10 und 11, die in ihren Ansichten im wesentlichen denen der Fig. 8 und 9 entsprechen, stellen nun eine erfindungsgemäße Lösung dieses Problems dar, die, wie bereits erwähnt, die Vorteile der Ausbildung von Tripelpunkten zur Ganze erhält, deren Nachteile aber vollständig vermeidet. Um dies zu erreichen, greift der Stab S5 nicht direkt am Tripelpunkt, sondern in seinem Bereich, in kleinem Abstand von ihm, an einem der beiden anderen am Tripelpunkt endenden Stäben, im dargestellten Beispiel am Stab S1 an. Wie bereits erwähnt, wird bevorzugt, dass dieser alternative Angriffspunkt A an demjenigen der beiden zur Verfügung stehenden Stäbe liegt, der mechanisch weniger belastet ist. Dadurch kann dessen Mehrbelastung durch die Induzierung eines Biegemomentes am Angriffspunkt A leichter abgefangen und beherrscht werden, als bei einem Angriffspunkt auf einem schon an sich hoch belasteten Stab,

Aus Fig. 11 gut ersichtlich ist der einfache Aufbau des nunmehr in seinem Kern einen Doppelpunkt darstellenden Pseudo-Tripelpunktes, statt der komplexen und teuren sphärischen Geometrie kann eine einfache kardanische Aufhängung für den Zapfen 6, der bereits Teil der beweglichen Plattform 3 (nicht dargestellt) ist, gewählt werden.

Die bisher beschriebenen Ausführungsformen und Varianten der Erfindung sind nun für alle ihre Anwendungen einsetzbar, aber selbstverständlich ist die Erfindung nicht darauf beschränkt. Es kann die Ausbildung eines Angriffspunktes A anders ausgestaltet sein als in den Fig. 10 und 11 dargestellt, es muss bei einem Doppelpunkt, unabhängig davon, ob es sich um einen Pseudo-Tripelpunkt oder um einen echten Doppelpunkt handelt, keine kardanische Aufhängung verwendet werden, sondern es kann auch hier eine sphärische Ausbildung vorgesehen sein, bei der dann nur die Anlenkung an die beiden angreifenden Stäbe einfacher als in Fig. 9 dargestellt, ausfällt, etc..

Der Ort, an dem die Ausbildung eines Pseudotripelpunktes erfolgt, liegt im Sinne der Erfindung so knapp an der betrachteten Plattform wie es die Konstruktion der Anlenkung erlaubt. Damit werden die in den durchlaufenden Stab eingebrachten Momente und die geometrischen Abweichungen vom (idealen) Tripelpunkt klein gehalten. Ersteres ist wegen der Masseersparnis bedeutsam, Letzteres wegen der einfacheren mathematischen Auslegung der Vorrichtung, die dann bis zum Betrieb als mit (idealen) Tripelpunkten versehen konzipiert werden kann und nur für den realen Betrieb mit den adaptierten Bewegungsgleichungen gerechnet werden muss. Als eine Art Faustregel kann angesehen werden, dass die Anlenkung innerhalb von 20 %, bevorzugt innerhalb von 10 % der Länge des betrachteten Stabes erfolgen soll. Bei mehreren Angriffspunkten an der beweglichen Plattform kann von 20 %, bevorzugt 10 % der Länge des kürzesten Stabes in seiner kürzesten Position ausgegangen werden.

Einen wesentlichen Aspekt einer Ausgestaltung der Erfindung, der bei allen folgenden Anwendungsbeispielen erkennbar ist, stellt es dar, dass vom bisher bei Parallelkinematiken (ausgenommen rein rotatorische) üblichen Anordnungsprinzip mit Zentralachse abgegangen wird. Technische Anwendungen sind üblicherweise so aufgebaut, dass Bewegungen in zueinander orthogonalisierten Komponenten verlaufen, wobei fast immer eine Richtung oder zumindest eine Ebene besteht, in der die Hauptbewegung und/oder Hauptbelastung erfolgt. Durch Berücksichtigung dieser Vorgabe macht es die Erfindung möglich, die meisten Verbindungselemente so symmetrisch anzuordnen, dass sie die dabei auftretenden Kräfte bestmöglich übertragen und dass die Hauptbewegung besonders bevorzugt bewirkt und gesteuert wird. Auch die Berechnung der Bewegungsabläufe kann dadurch nochmals vereinfacht und damit beschleunigt werden. Für die Stabilisierung in Richtungen normal zur Symmetrieebene reicht dann zumeist ein einzelner, daher nicht symmetrisch ausgebildeter Stab, Aktuator oder Zugelement.

### Anwendung der Erfindung auf Hubtische:

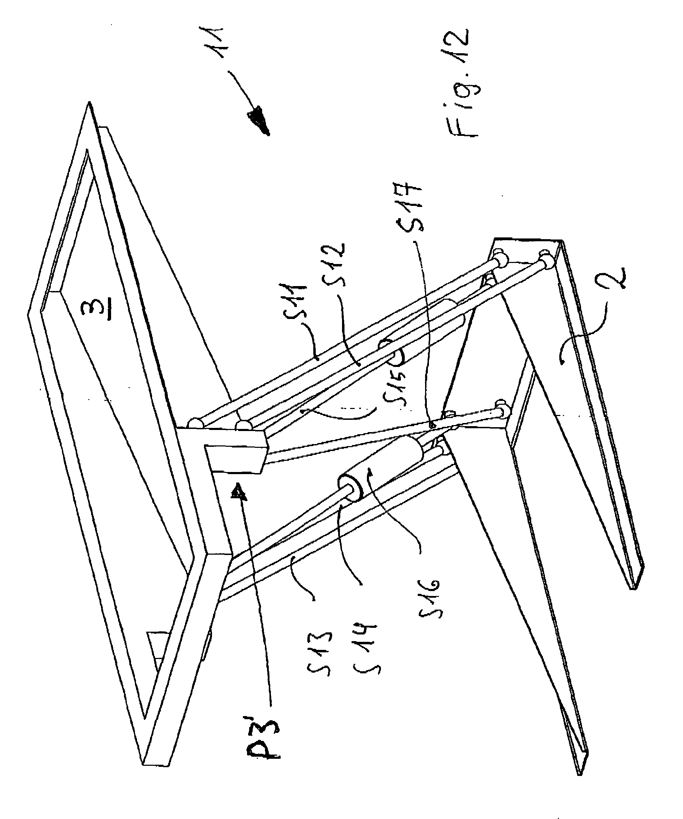

Die Fig. 12 stellt einen erfindungsgemäß ausgebildeten Hubtisch dar, der auf einer Parallelogrammführung beruht. Wie aus Fig. 12, die eine perspektivische Ansicht des in seiner Gesamtheit mit 11 bezeichneten Hubtisches darstellt, hervorgeht, ist eine Grundplattform 2 (es werden in der Beschreibung zur leichteren Vergleichbarkeit der Figuren einander kinematisch entsprechende Teile stets mit dem gleichen Bezugszeichen versehen) und einer beweglichen Plattform 3 samt dem diese beiden Plattformen verbindenden Stabwerk dargestellt. Dabei sind zwei Parallelogramme, einerseits durch die Stäbe S 11 und S12, anderseits durch die Stäbe S 13 und S 14 ausgebildet. Der Begriff Parallelogramm wird hier in einem allgemeinen Sinn verwendet, denn streng genommen liegen diese Stäbe nur dann parallel zueinander, wenn die bewegliche Plattform 3 eine solche Position einnimmt, dass ihre Längsmittelebene und die Längsmittelebene der festen Plattform 2 zusammenfallen.

Der Antrieb für die bewegliche Plattform 3, somit der Hubantrieb, wird durch zwei in ihrer Länge veränderliche Stäbe S 15 und S 16 (Aktuatoren) gebildet. Diese Stäbe greifen auf der festen Plattform 2 in einer Höhe an, die im wesentlichen der Höhe des entsprechenden Angriffspunktes der Stäbe S 11 und S 14 entspricht, an der beweglichen Plattform 3 aber in einer Höhe, die den dortigen Angriffspunkten der Stäbe S 12, S 13 entspricht. Auf diese Weise werden sogenannte Kraftecke gebildet, die in der Hauptbewegungsrichtung des Hubtisches 11 den Zeigerpaaren der Erfindung entsprechen.

Die Querkräfte werden über einen schräg verlaufenden Stab S 17 aufgenommen, der mit einem Anlenkpunkt auf der beweglichen Plattform 3 im Bereich der Anlenkpunkte des Zeigerpaares liegt und so einen Pseudo-Tripelpunkt P3' bildet.

Es besteht die Möglichkeit des Schrägstellens der beweglichen Plattform 3 bezüglich der festen Plattform 2. Diese Möglichkeit zur Schrägstellung der beweglichen Plattform, die ja in der praktischen Ausführung dem Hubtisch entspricht, kann, beispielsweise beim Stückguttransport, praktisch sein. Durch die Verdoppelung der einzelnen Elemente ist bei Gleichlauf der Antriebe ein paralleles Heben der beweglichen Plattform gewährleistet. Die bewegliche Plattform bewegt sich gegenüber der festen Plattform nicht wie bei klassischen Hubtischen vertikal nach oben, sondern führt eine Kreisbogenbewegung aus, was in kaum einem Fall nachteilig und in vielen Fällen vorteilhaft ist. Durch die Art der Bewegung und die Anordnung der Antriebe an den Stäben S15 und S16 erreicht man einen unerwartet gleichmäßige Kräfteverlauf über die Hubhöhe, der um nicht einmal 10% vom Mittelwert abweicht. Im Vergleich dazu sei darauf hingewiesen, dass im Stand der Technik beim Abheben aus der unteren Endlage Kräfte auftreten, die bis zum Doppelten des Mittelwertes reichen.

Wie aus der Zeichnung unmittelbar ersichtlich ist, ergibt sich durch die Möglichkeit, einzelne der in ihrer Länge als konstant angegebenen Stäbe (passive Stäbe) ebenfalls längenverstellbar auszubilden, eine leicht mögliche Anpassung an Notwendigkeiten wie zusätzliches Verdrehen um eine Achse etc..

Der schräg verlaufende Stab S17 kann in der dargestellten Variante, bei der sein Anlenkpunkt auf der festen Plattform 2 (Fußpunkt F17) auf der Geraden liegt, die durch die Lager der inaktiven Stäbe S12 und S13 geht und solange weder seine Länge noch sein Fußpunkt (gleichbedeutend) geändert werden, als inaktiv angesehen werden und tritt im mathematischen Modell nicht auf.

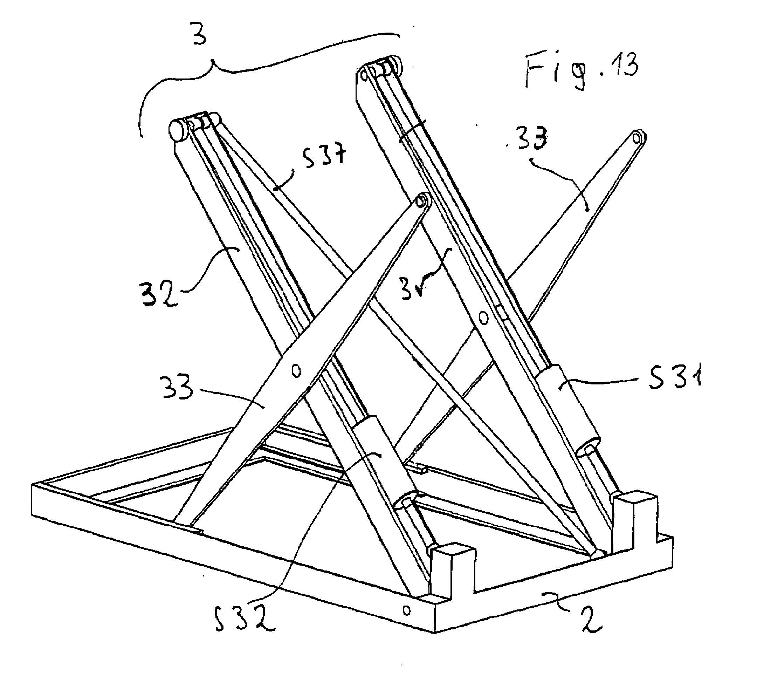

Die Fig. 13 zeigt eine in ihrer Optik "klassisch" erscheinende Ausführungsform 31 eines Hubtisches: Ein in seiner Gesamtheit mit 32 bezeichneter Scherenmechanismus besorgt die Führung der beweglichen Plattform 3, die aus Gründen der Übersichtlichkeit nicht selbst dargestellt ist, sondern nur durch die freien Enden des Scherenmechanismus 32, 33, der Aktuatoren S31 und S32 und des Querstabs S37 angedeutet ist.

Dabei bilden die jeweiligen Schenkel 31, 32 des Scherenmechanismus mit den zugehörigen Stäben S31 bzw. S32 ein Zeigerpaar und besorgen die Hauptbewegung der beiden Plattformen zueinander. Wie in den zuvor besprochenen Ausführungsbeispielen werden Querkräfte über einen schrägen Stab, hier S37, der auch an der beweglichen Plattform 3 den Tripelpunkt bildet, abgeleitet. Durch unterschiedliche Betätigung der beiden Aktuatoren S31 und S32 kann eine Schrägstellung der beweglichen Plattform 3 bezüglich der festen Plattform 2 erreicht werden.

### Anwendung der Erfindung auf Hängebahnen:

Hängebahnen sind mit Hubtischen kinematisch eng verwandt, wobei zufolge der Umkehr der üblichen Situation bei den Hubtischen und den meisten anderen Kinematiken die feste Plattform 2, der Hängerahmen, im Gravitationsfeld der Erde oberhalb der beweglichen Plattform 3, dem Bauteilträger, angeordnet ist, sodass üblicherweise Zug- und Druckkräfte in den einzelnen Bauteilen vertauscht sind.

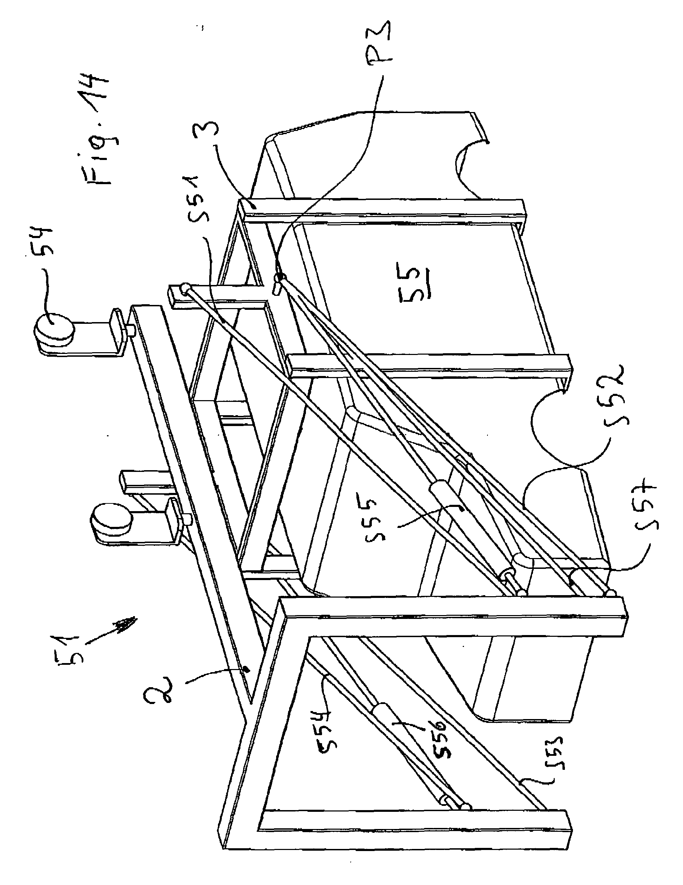

Die Fig. 14-15 zeigen eine Hängebahn, deren Kinematik im wesentlichen eine Umkehr der Kinematik des Hubtisches gemäß Fig. 12-13 darstellt. Die passiven Stäbe S51, S52 auf der einen (in der Figur vorderen) Seite und die passiven Stäbe S53, S54 auf der anderen (in der Figur hinteren) Seite bilden jeweils ein Parallelogramm, zumindest bei symmetrischer Lage der beiden Plattformen und unter Vernachlässigung unterschiedlicher Abstände der Kopfpunkte bzw. Fußpunkte zur Längsmittelebene.

Betätigt werden diese Parallelogramme durch zueinander bei symmetrischer Anordnung der Plattformen 2, 3 parallel verlaufende Aktuatoren S 55 und S56, die Querkräfte werden durch einen schräg verlaufenden passiven Stab S57 aufgenommen.

Augenfällig ist, dass durch die Notwendigkeit, den Raum zwischen den Zeigerpaaren (Kraftecken) und den Parallelogrammen zur Aufnahme des zu transportierenden Gegenstands, im gezeigten Darstellungsfall eine Karosserie 55, freizulassen, der Querstab oder Diagonalstab S57 mit dem Zeigerpaar (S52, S55) dem er zugeordnet ist, einen sehr spitzen Winkel am Tripelpunkt P3 bildet und daher, um die auftretenden Querkräfte zuverlässig aufnehmen zu können entsprechend massiv ausgebildet sein muss.

Es ist bei der Darstellung dieser Variante stets zu beachten, dass die in der Zeichnung anscheinend "starr ineinander mündenden" Stäbe nur aus Gründen der Übersichtlichkeit so dargestellt sind und in Wirklichkeit Tripelpunkte, bzw. Pseudotripelpunkte oder Doppelpunkte bzw. Pseudodoppelpunkte bilden, wobei jeder der dort mündenden Stäbe für sich sphärisch bzw. mit der für seine Bewegungen notwendigen Freiheit angelenkt ist.

Bei den Bewegungsmöglichkeiten der Vorrichtung 51 ist zu beachten, dass durch die Möglichkeit des Verfahrens der festen Plattform 2 entlang der (nicht dargestellten) Bahn mittels der Tragrollen 54 ein vertikales Absenken bzw. Anheben der beweglichen Plattform 3 möglich ist, (gegenüber einem ortsfesten Koordinatensystem) da ja die Bezeichnung "feste Plattform" nur als Bestimmungsangabe innerhalb des Rahmens der Erfindung anzusehen ist aber offen lässt, ob und wie diese feste Plattform sich gegenüber einem Inertialsystem bewegt.

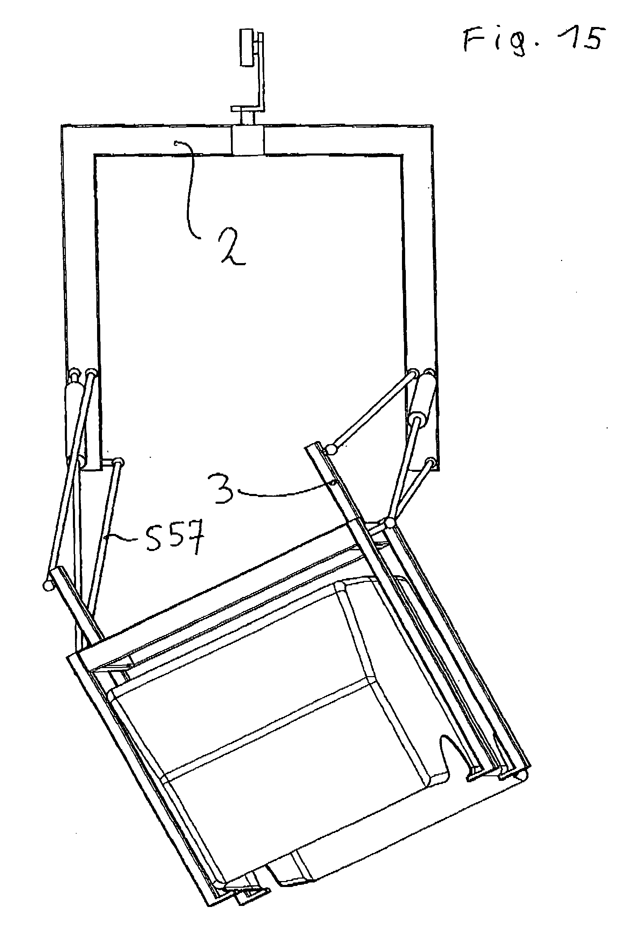

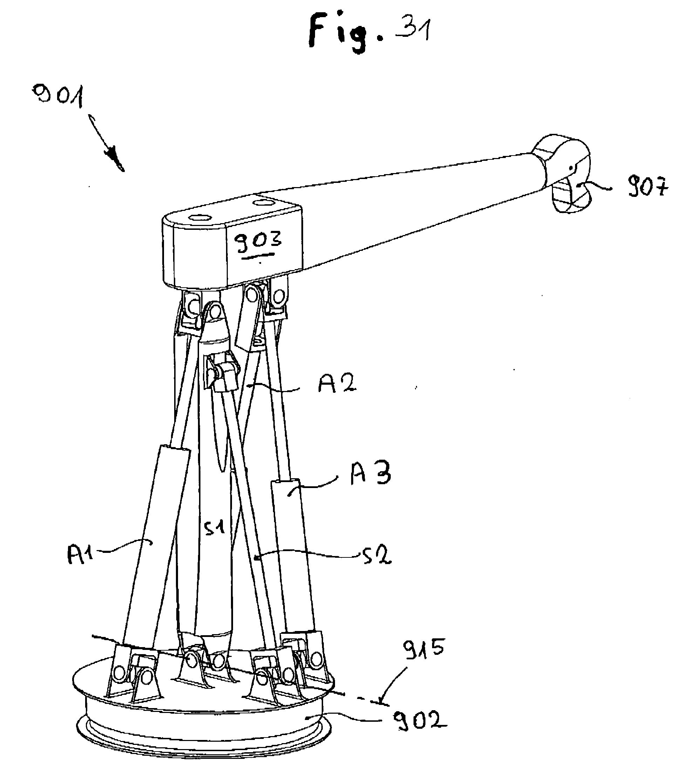

Die Fig. 15 zeigt die Möglichkeit des Schrägstellens des beweglichen Rahmens 3 gegenüber dem festen Rahmen 2, dabei soll insbesondere darauf verwiesen werden, dass der schräg verlaufende Stab S57, der die Querkräfte aufnimmt, in Fig. 31 gut zu erkennen ist.

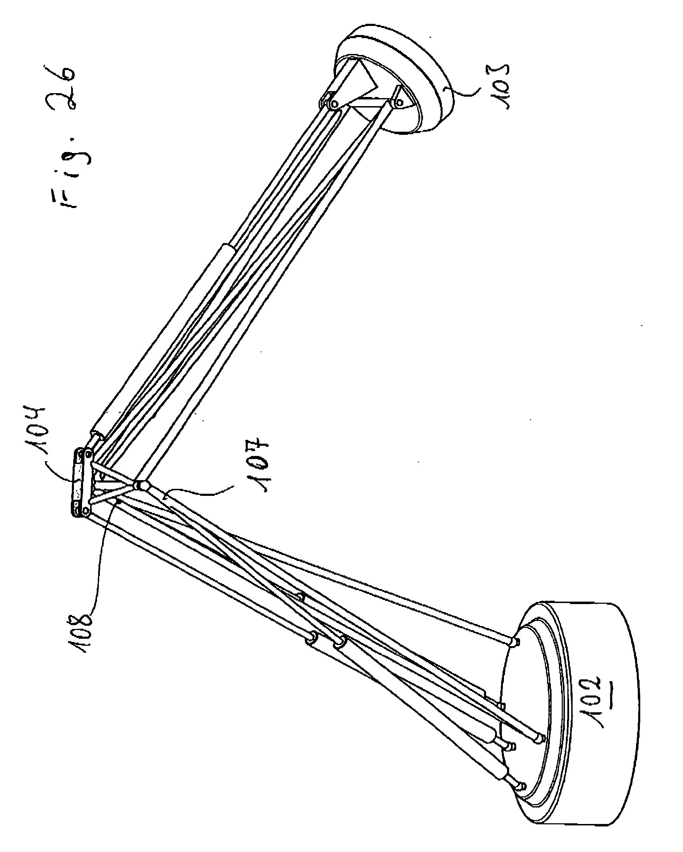

Die Erfindung ist nicht auf die dargestellten und erläuterten Ausführungsbeispiele begrenzt, sondern kann verschiedentlich abgewandelt und an die Aufgabengebiete angepaßt werden. Es soll besonders darauf hingewiesen werden, dass die Bestimmung "parallel" für passive Stäbe, Aktuatoren, etc. je nach den beschriebenen Ausführungsformen nicht für alle Lagen der Plattformen 2, 3 zueinander streng gelten muß, wie insbesondere die Fig. 15, 16; 26; 31 zeigen. Gemeint ist damit immer die Lage der Elemente bei einer "Grundposition" der Plattformen zueinander, und auch dabei können die Anlenkpunkte der Stäbe, Aktuatoren, Seile, so zueinander versetzt sein, dass die Eigenschaft der "Parallelität" nur grosso modo erfüllt ist.

### Anwendung der Erfindung auf Knickarm-Kinematiken:

Die Erfindung wird im folgenden anhand einiger Anwendungsbeispiele betreffend verschiedene Formen von sogenannten Knickarmen, wie Sie bei Robotern in der industriellen Fertigung verwendet werden, geoffenbart. Derartige Konstruktionen werden, unter anderer Bezeichnung, auch im Kranbau, bei Hebezeugen, sogenannten Manipulatoren, etc., verwendet. Derartige Gebilde bestehen aus einer Basis, einem daran befestigten Oberarm, einem daran vorgesehenen Gelenk, oft Ellenbogen genannt, und einem Unterarm mit Werkzeugträger, Greifer, etc.. Es ist nun die Grundidee der Erfindung, zumindest eine, bevorzugt beide der Untereinheiten Basis-Arm-Ellenbogen bzw. Ellenbogen-Unterarm-Werkzeugträger durch zumindest eine erfindungsgemäße Parallelkinematik zu ersetzen.

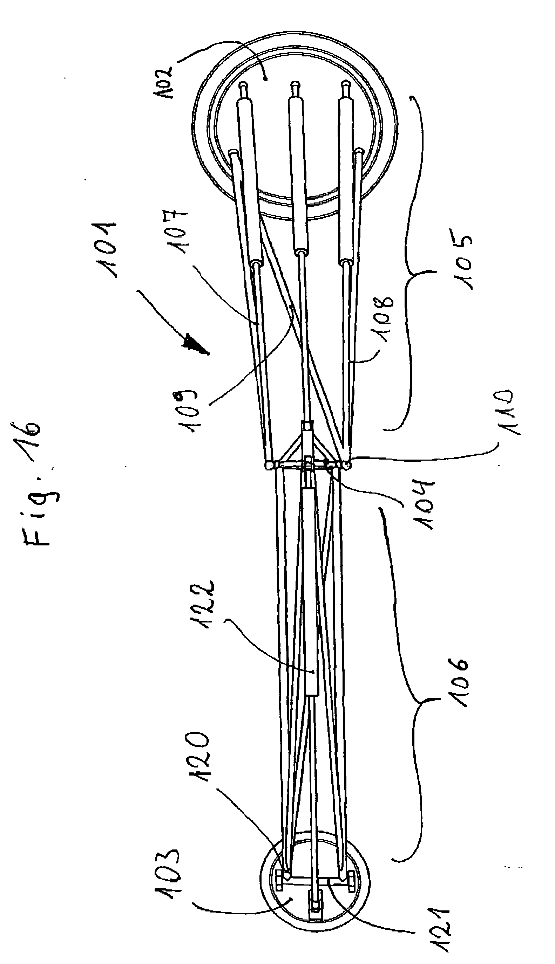

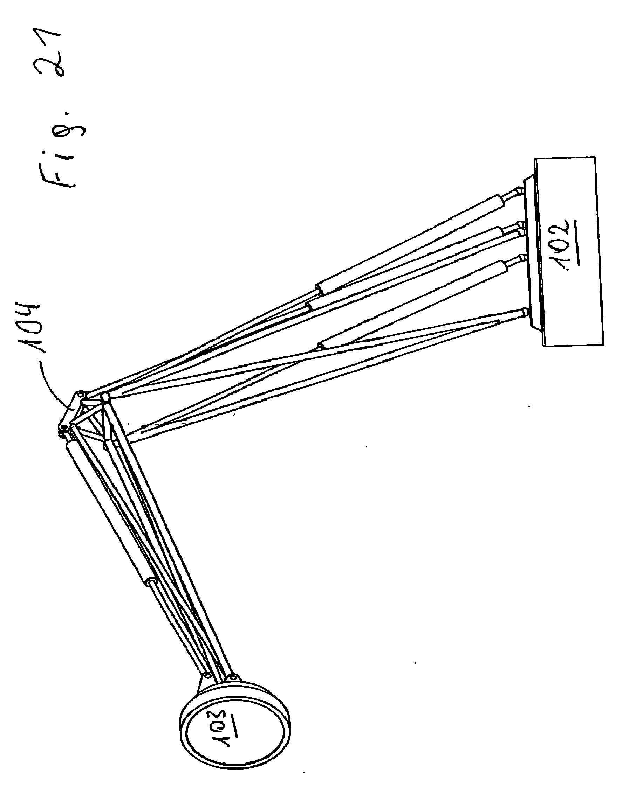

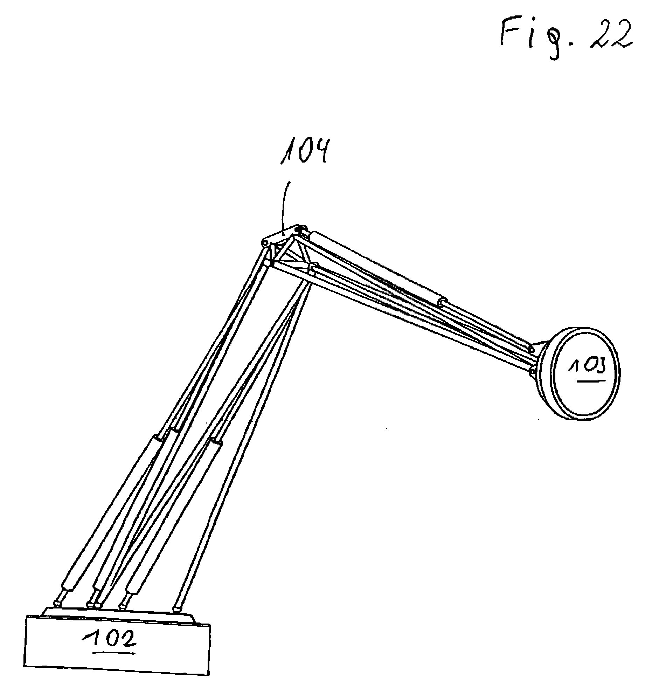

Die Fig. 16 bis 22 zeigen eine erste Variante eines Knickarmes, wie er beispielsweise für einen Roboter oder eine spezielle Hubanordnung, beispielsweise einen Kran, etc. verwendet werden kann. Die Grundidee bei der Verwirklichung des Knickarmes liegt neben der Verwendung von Tripelpunkten oder Pseudo-Tripelpunkten vor allem darin, durch eine serielle Kombination zweier parallelkinematischer Vorrichtungen die bisherigen Nachteile von mechanischen Systemen, die auf Parallelkinematik beruhen, zu vermeiden.

Wie eingangs erläutert, weisen bekannte Parallelkinematiken den großen Nachteil auf, einen großen Raumbedarf zu besitzen und dabei nur einen sehr geringen Arbeitsbereich zu erfassen. Durch die Erfindung, die vorschlägt, zwei parallelkinematische Systeme in Serie zu schalten, wobei die bewegliche Plattform des ersten Systems als feste Plattform des zweiten Systems dient und somit zu einer Mittelplattform wird, gelingt es, äußert bewegliche und mit einem großen Aktionsradius ausgestattete Vorrichtungen zu schaffen. Die durch das serielle Anordnen von Kinematiken üblichen Nachteile treten überraschenderweise praktisch nicht auf, da einerseits nur eine zweistufige Serie geschaffen wird, insbesondere aber auch, weil durch die parallelkinematische Ausbildung der beiden Stufen der seriellen Kinematik die toten Massen außerordentlich klein sind und da durch die üblicherweise verwendeten Lager, wie oben ausgeführt, meist vorgespannte und damit hochgenaue Lager, eine der wesentlichen Problematiken der seriellen Kinematik, nämlich die Addition der Fehler der Positionierung, keine praktische Rolle spielt.

In den Fig. 16 bis 22 ist nun eine erste Variante eines solchen Knickarmes dargestellt, der an seiner beweglichen Plattform ein Werkzeug, eine Hubvorrichtung, eine Greifvorrichtung, ein Werkstück etc. ergreifen, halten, bearbeiten, führen, heben etc. kann.

Es zeigt dabei die Fig. 16 eine Draufsicht auf einen erfindungsgemäßen Knickarm 101, bestehend im wesentlichen aus einer festen Plattform 102, einer ersten Parallelkinematik 105, einer Zwischenplattform 104, einer zweiten Parallelkinematik 106 und einer beweglichen Plattform 103. Die feste Plattform 102 kann tatsächlich fest verankert sein, beispielsweise im Fundament einer Werkhalle oder an einer Bearbeitungsmaschine, es kann sich, wenn der Knickarm als Kran verwendet wird, die feste Plattform 102 entlang von Schienen bewegen oder zumindest um ihre vertikale Mittelachse drehbar gelagert sein, es kann, wenn der Knickarm 101 als Führung für eine Baggerschaufel dient, die feste Plattform 102 mit einer Tragvorrichtung eines Fahrzeuges verbunden sein u.dgl. mehr.

Die erste Parallelkinematik 105 besteht im dargestellten Ausführungsbeispiel aus zwei Zeigerpaaren bzw. Kraftecken 107, 108, die jeweils aus einem Aktuator und einem passiven Stab bestehen und an der Zwischenplattform 104 Doppelpunkte ausbilden. An einem dieser Doppelpunkte ist durch einen Querstab 109 ein Tripelpunkt 110 ausgebildet, womit all die Vorteile, die in der Einleitung der Beschreibung ausführlich erläutert wurden, erreicht werden.

Es soll, nicht nur zur Fig. 16, sondern zu allen anderen Figuren auch, nochmals darauf hingewiesen werden, dass aus Gründen der einfacheren Darstellung die an Doppelpunkten, Tripelpunkten oder Pseudo-Tripelpunkten beteiligten Stäbe bzw. Verbindungselemente als einfach in diese Punkte einmündend und damit auch als untereinander einmündend dargestellt werden, ohne dass die tatsächliche mechanische Ausbildung der Kinematik in diesem Bereich gezeigt wird. Diese ist in den Fig. 1 bis 11 ausführlich dargestellt und erläutert, sodass aus Gründen der besseren Übersichtlichkeit bei den Figuren, die die gesamten Kinematiken in ihren verschiedenen Ausbildungen zeigen, diese Details nicht dargestellt werden.

Die vorstehend erläuterte erste Parallelkinematik 105 bewegt die Zwischenplattform 104 so, wie es an Hand der Fig. 1 bis 11 dargelegt worden ist. Nunmehr wird diese Zwischenplattform 104 als feste Plattform für eine zweite Parallelkinematik 106 verwendet bzw. angesehen, die ähnlich aufgebaut ist wie die erste Parallelkinematik 105, aber einfacher, nämlich mit nur einem Aktuator 122, ausgebildet ist. Es ist auch hier ein Tripelpunkt bzw. Pseudo-Tripelpunkt 120 an der beweglichen Plattform 103 vorgesehen, sodass auch diese Parallelkinematik erfindungsgemäß ausgebildet ist und alle damit erreichbaren Vorteile erhalten werden. Es ist besonders darauf hinzuweisen, dass bei den Parallelkinematiken gemäß dem Stand der Technik der Rechenaufwand derart kaskadierter Systeme, von denen schon jedes für sich nur iterativ zu lösen ist, absolut unbeherrschbar wäre.

Wie aus den Fig. 16 bis 22 ebenfalls leicht zu erkennen ist, besteht die zweite Parallelkinematik 106 dem Grunde nach aus einer Art Fortsatz der Zwischenplattform 104 und bildet, solange der Aktuator 122 nicht betätigt wird, einfach einen Teil dieser Zwischenplattform 104, die sodann gemeinsam mit der beweglichen Plattform 103 eine "exotische bewegliche Plattform" der ersten parallelkinematischen Vorrichtung 105 darstellt.

Durch die Ausbildung eines der Stäbe der zweiten Parallelkinematik 106 als Aktuator 122 und die passende Anordnung der Anlenkpunkte (Kopfpunkte) der anderen Stäbe an der beweglichen Plattform 103 als Doppelpunkte bzw. als Tripelpunkt wird nun eine Drehmöglichkeit um die durch die Anlenkpunkte an der beweglichen Plattform definierte Achse 121 geschaffen, und so aus der oben erläuterten exotischen beweglichen Plattform der ersten Parallelkinematik 105 eine Zwischenplattform 104 mit anschließender zweiter Parallelkinematik 106.

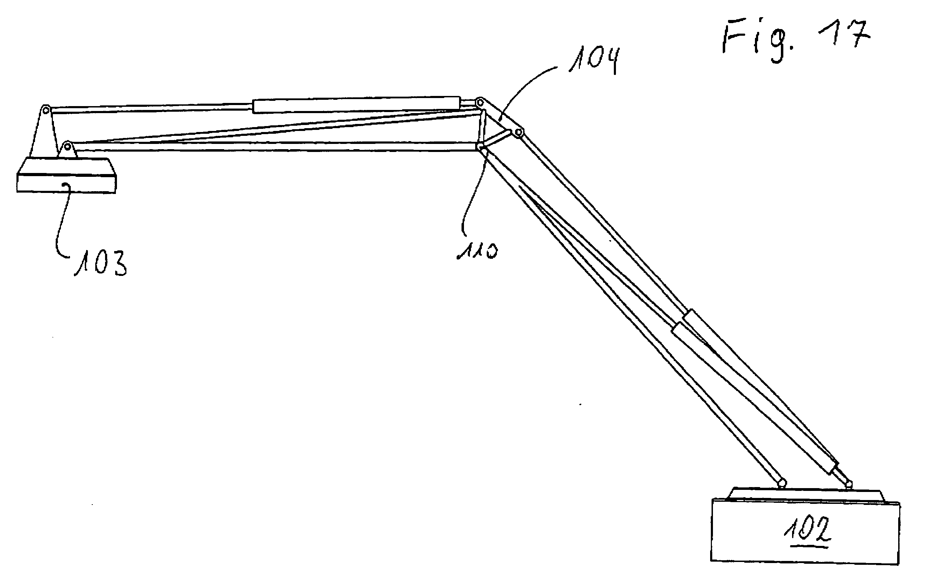

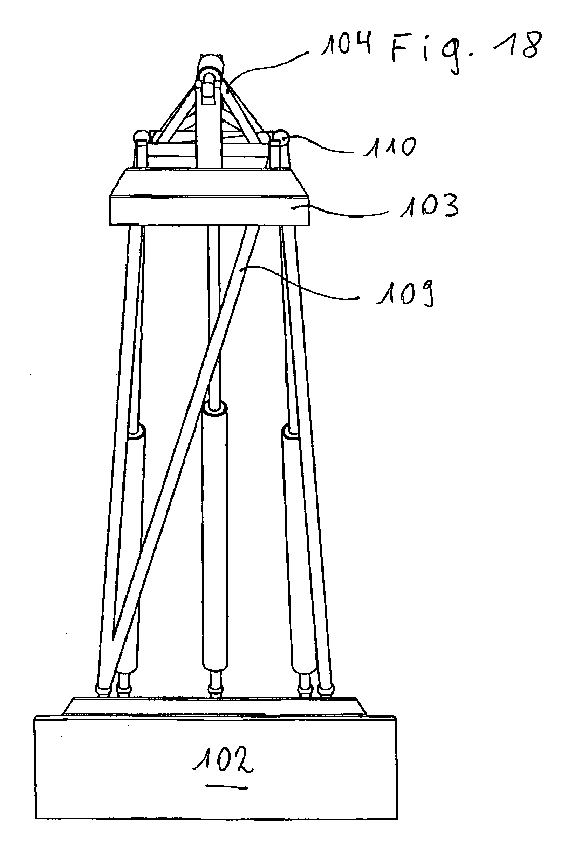

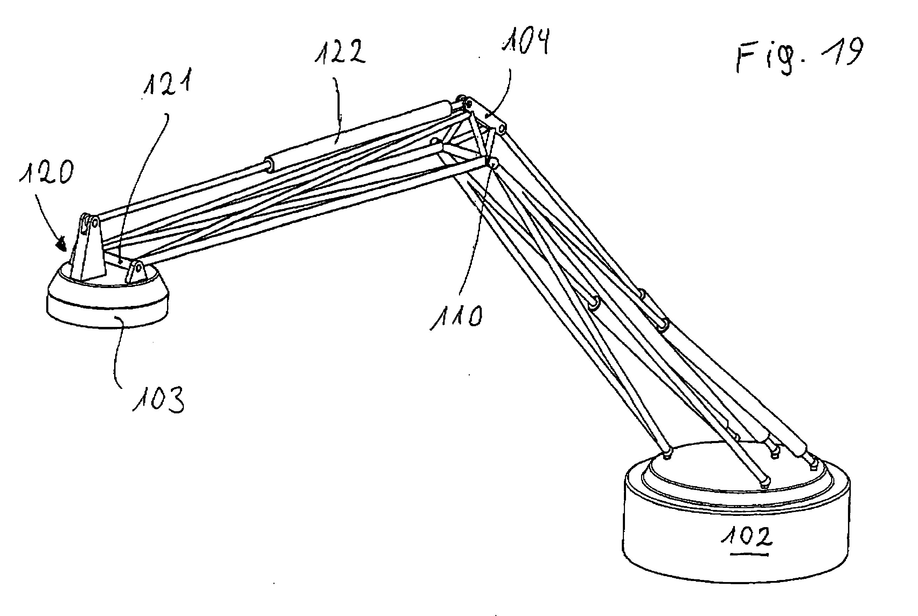

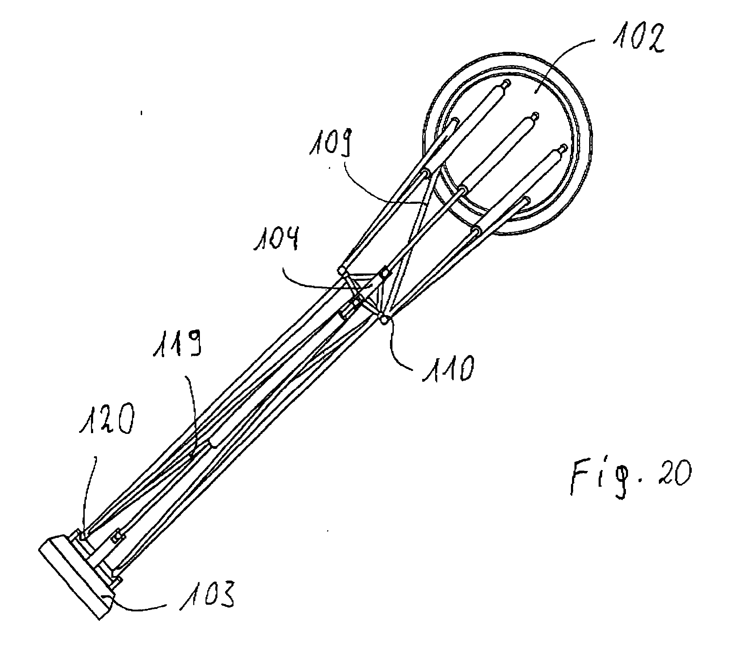

Die vielfältigen Bewegungsmöglichkeiten dieser Kinematik gehen aus den folgenden Figuren hervor, in denen aus Gründen der Übersichtlichkeit nur mehr die jeweils bedeutsamsten Bezugszeichen eingetragen sind. Dabei zeigt die Fig. 17 eine Seitenansicht des Knickarmes in der Stellung der Fig. 16 und die Fig. 18 eine Frontalansicht in dieser Stellung. Die Fig. 19 zeigt eine perspektivische Ansicht, die Fig. 20, 21 und 22 zeigen Ansichten in anderen Stellungen, wobei verschiedentlich (Fig. 20) auch der Querstab 119 der zweiten Parallelkinematik 106, der gemeinsam mit einem Zeigerpaar den Tripelpunkt 120 der zweiten Parallelkinematik 106 ausbildet, gut sichtbar ist.

Wenn man diese Beweglichkeit mit der Beweglichkeit üblicher Parallelkinematiken, wie beispielsweise dem Hexapod oder dem Tricept vergleicht, erkennt man die überraschende Vervielfachung der Reichweite und die mannigfaltigen Orientierungsmöglichkeiten der beweglichen Plattform, die nur durch die erfindungsgemäße Ausbildung des Knickarmes möglich ist.

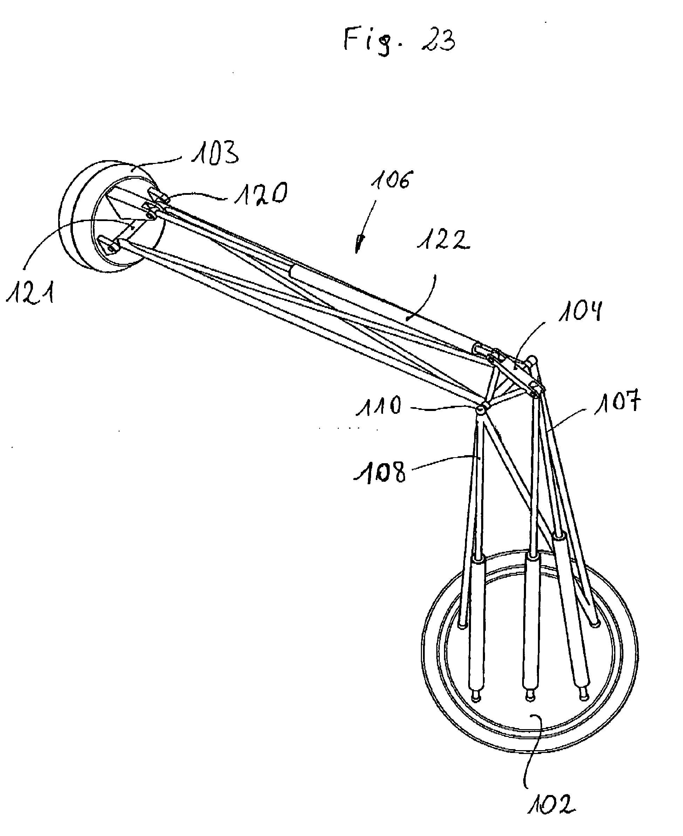

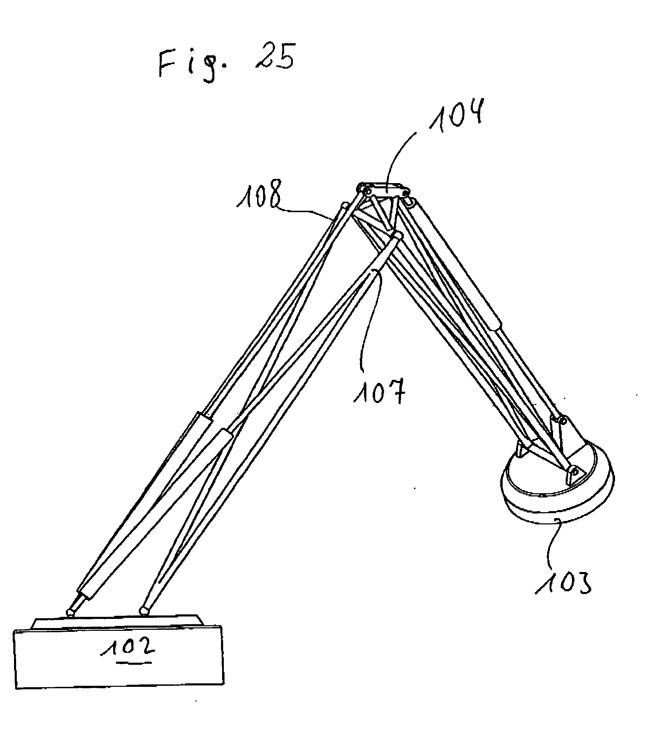

Die Fig. 16 bis 22 zeigen Positionen des Knickarmes, die erreicht werden können, wenn die beiden Zeigerpaare 107, 108 synchronisiert bewegt werden. Bei dieser Art der Bewegung ist es, wie insbesondere aus Fig. 20 hervorgeht, möglich, die bewegliche Plattform 103 normal zum Boden zu orientieren. Die Fig. 23 bis 26 zeigen nun Bewegungen, bei denen die beiden Zeigerpaare 107, 108 nicht synchron sondern voneinander unabhängig betätigt werden und es ist aus dieser Abfolge von Darstellungen ersichtlich, dass dann zwar eine zusätzliche Beweglichkeit der beweglichen Plattform 103 gewonnen wird, dass aber dafür der Preis zu zahlen ist, dass die bewegliche Plattform 103 nicht mehr normal bzw. parallel zum Boden, darunter wird hier die Ebene verstanden, in der die Fußpunkte der Verbindungsglieder (Stäbe, Aktuatoren) der ersten Parallelkinematik 105 angeordnet sind, erreicht wird. In der Folge wird dargelegt, wie erfindungsgemäß auch unter solchen Bedingungen eine solche Orientierung möglich wird.

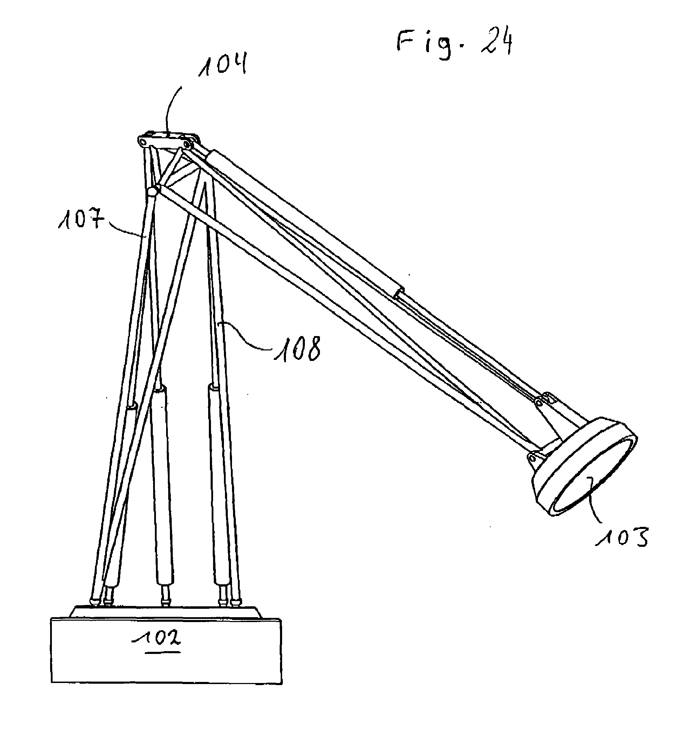

Aus Fig. 23, einer Draufsicht auf einen erfindungsgemäßen Knickarm entsprechend dem der Fig. 16 bis 22 ist ersichtlich, dass das Zeigerpaar 107 und das Zeigerpaar 108 nicht mehr symmetrisch zueinander verlaufen (asynchrone Betätigung der Zeigerpaare), d.h. der Aktuator des Zeigerpaares 107 ist länger als der Aktuator des Zeigerpaares 108, wodurch eine Drehung der Zwischenplattform 104 und damit der gesamten zweiten Kinematik 106 bewirkt wird. Diese in vielen Fällen angestrebte Schräglage und die damit erzielte größere Reichweite bringt es durch Schrägstellung der Zwischenplattform 104 aber mit sich, dass, wie oben kurz angeführt, die bewegliche Plattform 103 nicht mehr in eine Ebene normal bzw. parallel zu der Ebene der festen Plattform 102 gebracht werden kann. Dies ist insbesondere im Zusammenhalt mit den Fig. 24 bis 26 ersichtlich.

Die Erfindung ist nicht auf die dargestellten Ausführungsbeispiele beschränkt, sondern kann verschiedentlich abgewandelt werden. So ist es möglich, nur einen der beiden Abschnitte des Knickarmes mit einer erfindungsgemäßen Kinematik zu versehen, es können auch bei zwei derartigen Kinematiken andere Längenverhältnisse der beiden Parallelkinematiken zueinander gewählt werden, dies hängt selbstverständlich vom jeweiligen Anwendungsgebiet ab. Es ist selbstverständlich, möglich die gezeigten Ausführungsbeispiele für die unterschiedlichen ersten und zweiten Parallelkinematiken anders als dargestellt miteinander zu kombinieren, in Kenntnis der Erfindung ist es für den Fachmann ein Leichtes, hier günstige Kombinationen zu finden.

Selbstverständlich kann die bewegliche Plattform die für den jeweiligen Verwendungszweck angemessene Form aufweisen, das gleiche gilt für die feste Plattform, die nicht wirklich raumfest sein muss, sondern, es sei nochmals erwähnt, auch verfahrbar oder drehbar oder schwenkbar ausgebildet sein kann.

Die Mittelplattform ist in den dargestellten Ausführungsbeispielen mit Ausnahme des Letzten ein im wesentlichen tetraedisches Stabwerk, dies ist natürlich nicht notwendigerweise so, sondern nur wegen der leichteren kinematischen und dynamischen Beherrschbarkeit einer derartigen Konstruktion so dargestellt und gewählt worden.

### Anwendung der Erfindung auf das Verhältnis Parallelkinematik - Ausbildung der beweglichen Plattform:

Dieser Aspekt der Erfindung, durch den die Reichweite und der Umfang der Orientierung eines auf der beweglichen Plattform montierten Werkzeuges deutlich vergrößert wird, wird im folgenden anhand einiger Beispiele, teilweise unter Rückgriff auf bereits besprochene Figuren, näher erläutert. Da hier ein eigener Aspekt der Erfindung besprochen wird, kann es dazu kommen, dass abgebildete Teile unterschiedlich zu ihrer ersten Erläuterung benannt werden.

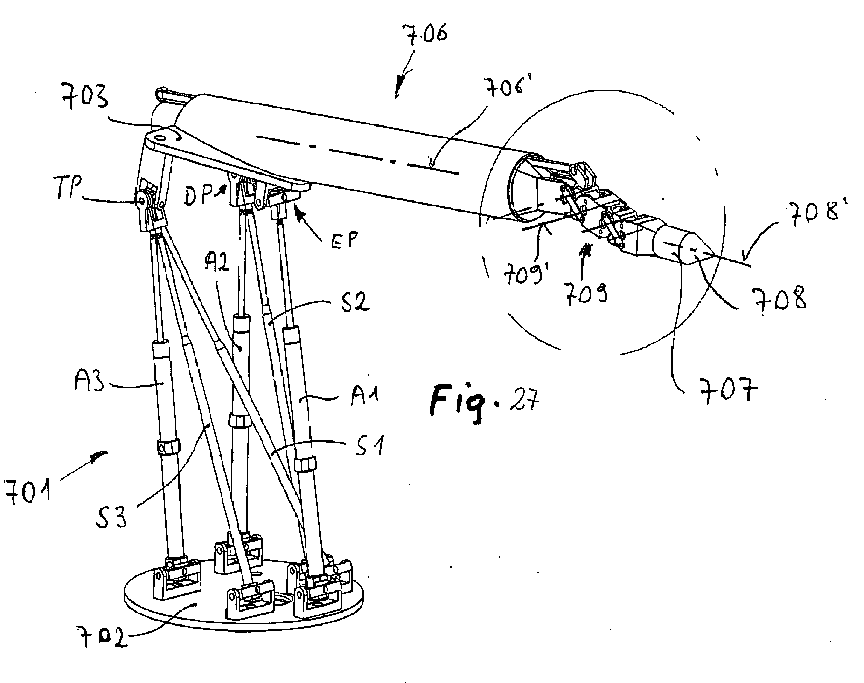

Die Fig. 27 zeigt rein schematisch einen erfindungsgemäßen Roboter 701. Der Roboter 701 besteht im wesentlichen aus einer festen Plattform 702, einer darauf aufbauenden parallelkinematischen Vorrichtung 705, einer von ihr bewegten beweglichen Plattform 703 samt fest mit ihr verbundenem Arm 706 und einer einen Werkzeugträger 707 aufweisenden Spitze.

Die Parallelkinematik 705 ist im dargestellten Ausführungsbeispiel eine sogenannte 3-2-1 Kinematik mit drei Aktuatoren und drei Stäben fester Länge. Auf der festen Plattform 702 sind die drei Aktuatoren A1, A2 und A3 und die drei Stäbe fester Länge S1, S2 und S3 in Einzelgelenken (Fußpunkte) gelagert. Ihre Angriffspunkte (Kopfpunkte) auf der beweglichen Plattform 703bestehen aus einem Tripelpunkt TP, einem Doppelpunkt DP und einem Einzelpunkt EP.

Fest mit der beweglichen Plattform 703 verbunden und damit Teil von ihr ist der Arm 706, der an seinem vorderen Ende eine bewegliche Spitze mit einem Werkzeugträger 707 und dem angedeuteten Werkzeug 708 trägt. Zwischen dem Werkzeugträger 707 und dem Arm 706 ist eine Gliederkette 709 mit mehreren zueinander parallelen Achsen 709' angeordnet. Um diese Achsen können die Glieder der Gliederkette 709 und damit der Werkzeugträger 707 nach Art menschlicher Finger gekrümmt werden.

Darüber hinaus ist im dargestellten Ausführungsbeispiel die Spitze 705, somit im wesentlichen die Gliederkette 709 samt Werkzeugträger 707 und dem Werkzeug, um die Armachse 706' rotierbar, sodass, bei Verdrehung um diese Achse 706' um etwa 90° das Werkzeug je nach Drehrichtung im wesentlichen normal zur Zeichenebene zum Betrachter hin oder vom Betrachter weg orientiert wäre.

Die Besonderheit der dargestellten Vorrichtung ist nun, dass selbst durch relativ geringe Längenänderungen der Aktuatoren A1, A2, A3 durch die große Länge des Armes 3 ein großer Arbeitsbereich für den Werkzeugträger 707 erreicht wird. Nutzbar wird dieser Arbeitsbereich aber nur dadurch, dass sich die Orientierung des Werkzeugträgers 707 bezüglich des Armes 706, beziehungsweise bezüglich dessen vorderer Endfläche, durch die Gliederkette 709 und, was bevorzugt wird, die Drehmöglichkeit bezüglich der Armachse 706' in weiten Grenzen verändern lässt, so dass zu jedem Arbeitspunkt, den die Spitze des Werkzeuges 708 anfahren kann, auch ein großer Bereich an zugänglichen Richtungen für die Werkzeugachse 708' erreichbar ist, was für die praktische Benutzung unbedingt erforderlich ist.

Es sei dazu nur darauf verwiesen, dass beim Schweißen, beim Lackieren, beim Ergreifen oder Absetzen von Gegenständen, etc. die Orientierung des jeweiligen Werkzeugs am Arbeitspunkt genauso wichtig ist wie die Erreichbarkeit des Arbeitspunktes.

Die erfindungsgemäße Kombination macht sich die hohe Genauigkeit der Bewegungen parallelkinematischer Vorrichtungen und die genaue Wiederholbarkeit dieser Bewegungen zu nutze, da mit herkömmlicher serieller Kinematik die angestrebten Ziele nicht erreichbar wären. Nur diese hohe Genauigkeit, verbunden mit dem hervorragenden Verhältnis von Nutzlast zu toter Last und die Anordnung der Armachsen bzw. Fingerachsen 706' und 709' nahe des Werkzeuges 708, wodurch nur geringe Massenträgheitsmomente überwunden werden müssen und ein eventueller Positionierungsfehler sich nicht mehr fortpflanzt, ermöglicht es, diese Ziele zu erreichen.

Auch die Fig. 16 bis 26 zeigen eine Variante des erfindungsgemäßen Prinzips, einen langen Arm mit der beweglichen Plattform einer Parallelkinematik zu verbinden, um große Reichweite mit mannigfaltigen Bewegungsmöglichkeiten eines Roboters od.dergl. zu verbinden. Die Kinematik insgesamt besteht wiederum aus einem auf einer festen Plattform 102 aufgebauten parallelkinematischen Bereich 101 und der beweglichen Plattform 104, auf der ein aus einem Stabwerk bestehender Arm 106 fest angeordnet ist bzw. einen Teil dieser beweglichen Plattform 104 bildet. Um eine Armachse 121 am freien Ende des Armes 106 ist ein Werkzeugträger 103 verschwenkbar befestigt, die Verschwenkung um diese Achse 121 erfolgt im dargestellten Ausführungsbeispiel durch eine hydraulische Zylinder-Kolben-Einheit 122.

Die Parallelkinematik 101 besteht aus drei Aktuatoren und aus drei Stäben fester Länge und ist als 3-2-1 Kinematik ausgebildet. Aus Gründen der Übersichtlichkeit wurde auf die Einzeichnung der Tripel- und Doppelpunkte verzichtet, dies ist im Hinblick auf den ähnliche Aufbau zu den anderen Vorrichtung dieser Beschreibung für den Fachmann ohne Verlust an Information möglich.

Aus der Zusammenschau der Fig. 16 bis 26 ist ersichtlich, in welch weitem Bereich der Werkzeugträger 103 bezüglich der festen Plattform 102 sowohl verfahren als auch orientiert werden kann, und dies trotz nur relativ geringer Längenänderungen der Aktuatoren und des Stellantriebes 122 für die Verschwenkung um die Handachse 121.

Es ist aus den Darstellungen der erläuterten Ausführungsbeispiele ersichtlich, dass die Parallelkinematiken in ihren verschiedenen Ausführungsformen an die jeweiligen Arbeitsgebiete angepasst sind, und dass die für Parallelkinematiken nicht übliche Verwendung von Stäben konstanter Länge in Verbindung mit Aktuatoren bei geeigneter Wahl der Anordnung dieser Elemente eine ausreichend hohe Beweglichkeit zur Verfügung stellt. Insbesondere in Verbindung mit der 3-2-1 Kinematik und der Verwendung von Pseudo-tripelpunkten und Pseudodoppelpunkten erzielt man auf unerwartet einfache und damit kostengünstige Weise kinematische Vorrichtungen, die von ihrer Genauigkeit und Tragfähigkeit den parallelkinematischen Vorrichtungen des Standes der Technik entsprechen, dabei aber erlauben, ihre Bewegungen in Form geschlossener mathematischer Lösungen anzugeben, sodass die Verfahrbarkeit wesentlich rascher und genauer möglich ist als im Stand der Technik.

Dazu kommt, dass durch die spezielle Ausgestaltung der beweglichen Plattform, denn der Arm ist gemäß dieses Aspektes der Erfindung ein fester Bestandteil dieser Plattform, und durch das Vorsehen zumindest einer Schwenkachse für den Werkzeugträger im Bereich des Überganges vom Arm zum Werkzeugträger, ein Ausmaß des Arbeitsbereiches und eine Flexibilität der Orientierung des Werkzeugträgers und damit des Werkzeugs erzielt wird, die im Stand der Technik bei bisher keiner Vorrichtung erreichbar war. Selbstverständlich ist die Erfindung nicht auf die dargestellten Ausführungsbeispiele beschränkt und kann verschiedentlich abgewandelt werden. So kann beispielsweise auch bei den Ausführungsformen gemäß der Fig. 91 der Arm 706, statt aus einem geschlossenen, rohrartigen Gebilde zu bestehen, aus einzelnen Stäben, somit einem Stabwerk, aufgebaut sein. Die Betätigungsorgane und Antriebe für die Verschwenkung des Werkzeugträgers um die verschiedenen ihm zur Verfügung gestellten Schwenkachsen können anders ausgebildet sein als in den dargestellten Beispielen und es können selbstverständlich auch parallelkinematische Vorrichtungen verwendet werden, die statt mit Aktuatoren veränderlicher Länge mit lageveränderlichen Fußpunkten bewegt werden. Diese Arten von parallelkinematischen Vorrichtungen sind aus dem Stand der Technik bekannt, ebenso wie die Anwendungsgebiete bzw. die kinematischen Grundlagen, die es für den Fachmann auf dem Gebiet der Kinematik möglich machen, die für das jeweilige Anwendungsgebiet günstigste Form an kinematischer Vorrichtung zu bilden.

In den Darstellungen wurden, wie bereits mehrfach dargelegt, die Tripelpunkte bzw. die Pseudotripelpunkte und die Doppelpunkte bzw. die Pseudodoppelpunkte im allgemeinen nicht in ihrem konstruktiven Aufbau dargestellt, meist wurde zur Vermeidung einer Überfrachtung der Zeichnung ein Zusammenfließen der Stabumrisse als Darstellung gewählt. Selbstverständlich bedeutet dies aber nicht, dass die so quasi als Einheit dargestellten Stäbe zueinander unbeweglich wären, es wird damit nur ihr Angreifen an einen gemeinsamen Punkt bzw. einen Pseudo-gemeinsamen Punkt angezeigt.

Die bewegliche Plattform kann, wie aus den Zeichnungen deutlich ersichtlich ist, die unterschiedlichsten Formen aufweisen und, wie in der Fig. 27, tatsächlich einer Plattform ähneln, sie kann aber auch, in ein starres Stabwerk aufgelöst sein, an dessen Knoten die Stäbe der Parallelkinematik angreifen. Schließlich ist es auch möglich, dass die bewegliche Plattform 6 eine Art Platte oder dergleichen trägt, um eine ausreichend stabile und doch leichte Befestigungs- und Angriffsmöglichkeit für die Stäbe, die den Arm bilden, und die Betätigungseinrichtungen die den Werkzeugträger verschwenken, zu schaffen.

Die feste Plattform schließlich ist nicht zwingend wirklich raumfest oder fest bezüglich eines Inertialsystems zu denken, sondern kann ihrerseits auf Rollen, Rädern od.dergl. beweglich sein, insbesondere wenn der Roboter 1 große Ausmaße aufweist und beispielsweise in der Fertigung von LKWs, als Kran, im Schiffsbau od.dergl. eingesetzt wird.

Der in der Folge besprochene Aspekt der Erfindung bezieht sich auf parallelkinematische Vorrichtungen, bei denen die bewegliche Plattform über Stäbe mit der festen Plattform verbunden ist, wobei die Fuß- und Kopfpunkte der Stäbe an der jeweiligen Plattform ortsfest vorgesehen sind und zumindest zwei Stäbe auf einer der Plattformen, bevorzugt der beweglichen Plattform, einen gemeinsamen Angriffspunkt, somit einen Doppelpunkt oder Pseudodoppelpunkt, aufweisen, ein sogenanntes Krafteck.

Eine Form eines derartigen kinematischen Grundgebildes besteht nun erfindungsgemäß aus einem Stab fester Länge, im folgenden kurz Stab genannt, und einem Stab veränderlichter Länge, somit einem Aktuator, und wird im folgenden Krafteck genannt. Einer der Hauptvorteile eines solchen Gebildes ist die Möglichkeit, die Bewegung des gemeinsamen Kopfpunktes bezüglich der festen Plattform in geschlossener Form berechnen zu können, ein anderer, ebenfalls sehr wesentlicher Punkt ist, dass derartige Gebilde in verschiedenen Kombinationen die Schaffung individuell an die Gegebenheiten und Notwendigkeiten angepasster Parallelkinematiken erlauben, sodass nach einer Art Baukastenprinzip die Kosten für Entwicklung, Zertifizierung, Lagerhaltung, etc. extrem reduziert werden können.

Es soll an dieser Stelle speziell darauf hingewiesen werden, dass parallelkinematische Vorrichtungen nicht zwangsweise nur aus Stäben bestehen, die ausschließlich auf Zug oder Druck beansprucht sind, sondern dass es auch parallelkinematische Vorrichtungen gibt, bei denen auf einen oder mehrere der an sich notwendigen sechs Stäbe verzichtet wird und bei denen durch entsprechende Einschränkung der Beweglichkeit anderer Stäbe die Festlegung der Freiheitsgrade erfolgt, wobei aber durch die Einschränkung der Gelenkigkeit an den Angriffspunkten die entsprechenden Stäbe auch Biegebeanspruchungen und/oder Torsionsbeanspruchungen ausgesetzt sind.

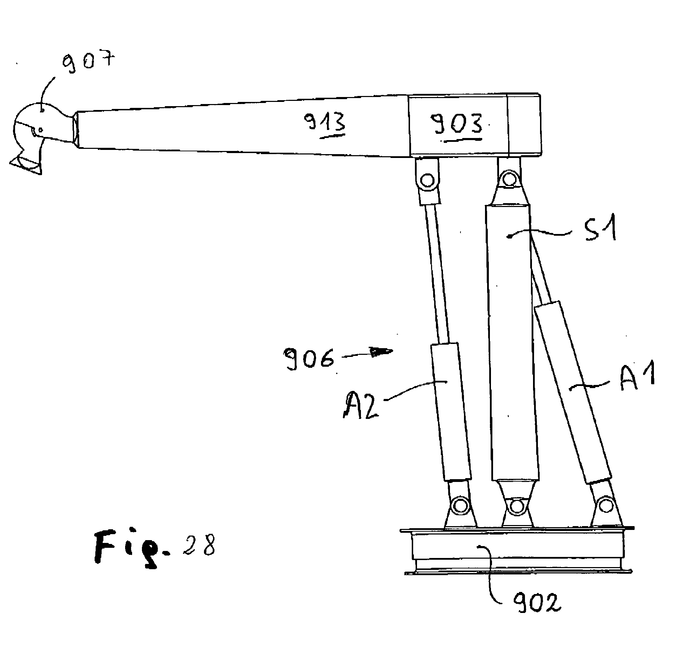

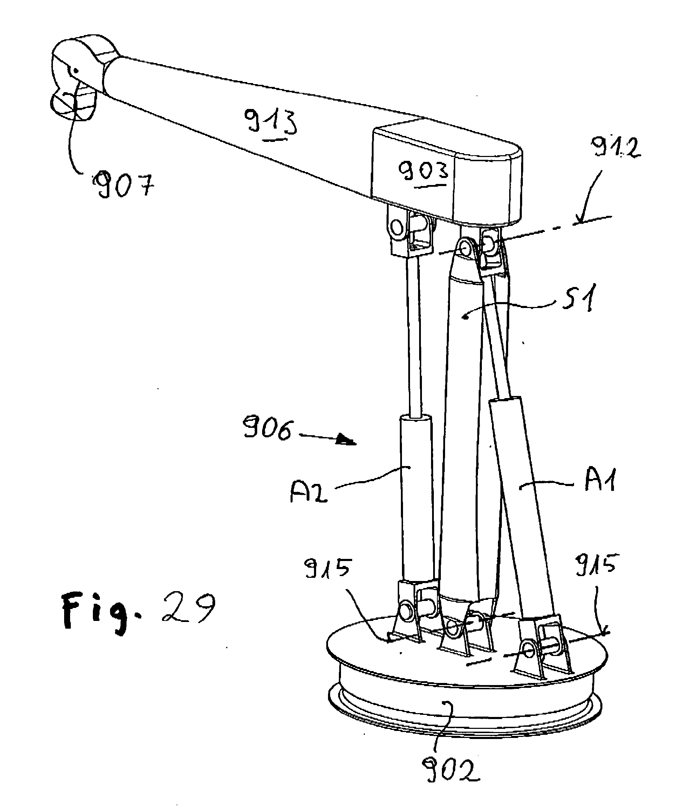

Die aus der Praxis bekannte rotatorische parallelkinematische Vorrichtung (KUKA, ABB) ist in diesem Kontext nicht als Stabkinematik anzusprechen und gehört daher in diesem Zusammenhang nicht zu den relevanten Vorrichtungen. Im Vergleich zu diesen massiven und komplexen Konstruktionen gemäß dem Stand der Technik werden im folgenden erfindungsgemäße Roboter mit zumindest vergleichbaren kinematischen Freiheiten und Möglichkeiten erläutert:
Einen erfindungsgemäßen Roboter, im wesentlichen entsprechend diesen beiden Industrierobotern, zeigen die Fig. 28 und 29 in schematischer Ansicht. Dieser Roboter weist eine erfindungsgemäß ausgebildete parallelkinematische Vorrichtung 906 auf, die auf einer festen Plattform 902 befestigt ist. Die feste Plattform 902 kann in Analogie zur festen Plattform 802 der Industrieroboter gemäß Fig. 94 bzw. 95 gegebenenfalls um eine Hochachse schwenkbar angeordnet sein, doch ist aus Gründen der Übersichtlichkeit diese Möglichkeit in den Figuren nicht dargestellt.

Die parallelkinematische Vorrichtung 906 weist ein Krafteck auf, bestehend aus dem Stab S1 und dem Aktuator A1. Die Lagerung der Fußpunkte dieser beiden Elemente erlaubt nur ein Verschwenken um bezüglich der festen Plattform 902 ortsfeste und zueinander parallel verlaufende Achsen 915, der Kopfpunkt der beiden Elemente ist als Doppelpunkt ausgebildet und ermöglicht ein Verschwenken um eine Achse 912, die zu den Achsen 915 parallel verläuft. Die Lage der Achse 912 und damit auch der auf ihr gelagerten mechanischen Verkörperung der beweglichen Plattform 903 ist durch die momentane Länge des Aktuators A1 bezüglich der festen Plattform 902 eindeutig festgelegt. Das bedeutet, dass die bewegliche Plattform 903 nur mehr um diese Achse 912 verschwenkbar ist, die jeweilige Winkelstellung um diese Achse wird durch die Länge des Aktuators A2 eindeutig festgelegt und damit auch die Orientierung des mit der beweglichen Plattform 903 fest verbundenen Armes 913. Der Werkzeughalter 907, starr oder beweglich am freien Ende des Armes 913 angeordnet, kann ähnlich den Werkzeughaltern der Industrieroboter ausgebildet sein.

Ein Vergleich mit Konstruktionen gemäß dem Stand der Technik verdeutlicht den leichten und eleganten Aufbau der erfindungsgemäßen Vorrichtung, die ausschließlich günstig im Handel erhältliche Standardelemente verwendet, die mit hoher Genauigkeit bei geringen Kosten besorgt bzw. hergestellt werden können. Es sind sämtliche Elemente gut zugänglich und einfach zu warten, die zu bewegenden toten Massen sind extrem reduziert.

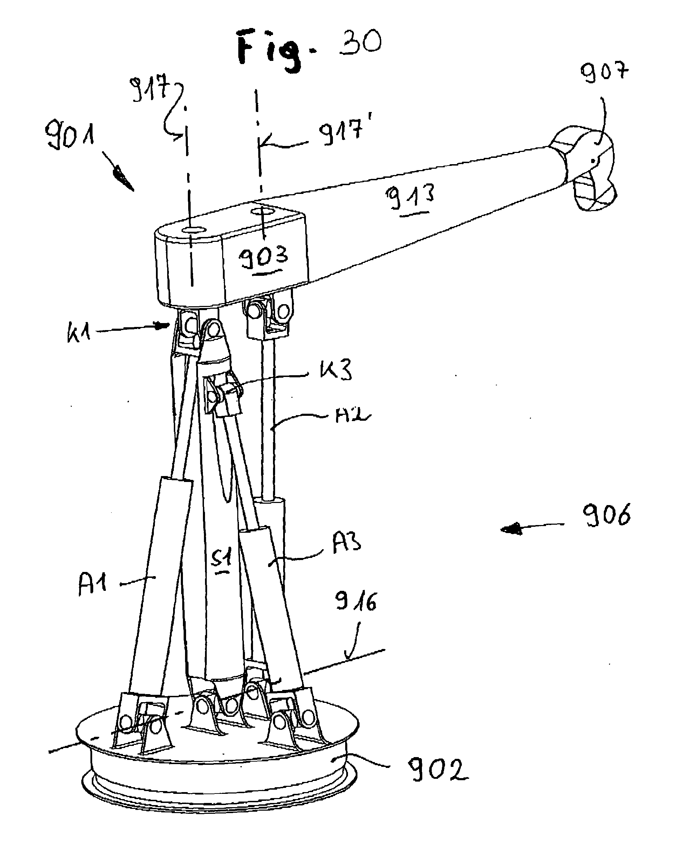

Eine Variante der Erfindung, bei der die Beweglichkeit der beweglichen Plattform 903 und damit des Werkzeughalters 907 gegenüber den Industrierobotern noch weiter erhöht ist, geht aus den Figuren 30 und 31 hervor. Diese beiden Figuren zeigen einen Roboter 901 ähnlich dem der Fig. 96, 97, mit einer parallelkinematischen Vorrichtung 906 zwischen der festen Plattform 902 und der beweglichen Plattform 903, bei der im Vergleich zum Roboter gemäß den Fig. 28, 29 der Aktuator A2 durch zwei Aktuatoren A2, A3 ersetzt ist.

Am Krafteck, das aus dem Stab S1 und dem Aktuator A1 gebildet wird, hat sich nur die Konstruktion des Kopfpunktes K1 geändert, das Kardangelenk ist um eine Hochachse 917 drehbar mit der beweglichen Plattform 903 verbunden, ebenso das Kardangelenk, an dem die beiden Aktuatoren A2, A3 angreifen, um eine dazu parallele Achse 917'. Dies ermöglicht eine Bewegung der beweglichen Plattform 903 nicht nur um die Achse 912 (Fig. 29), sondern auch um eine normal dazu verlaufende Achse. Um Verspannungen zu vermeiden, wurde der Fußpunkt des Aktuators A1 mit einer kardanischen Aufhängung ausgebildet, dies ist rein von der Konstruktion her aber nicht notwendig.

Eine Variante mit weiter erhöhter Beweglichkeit zeigt die Fig. 30: Ausgehend von einem Roboter 901 entsprechend den Fig. 28, 29 sind hier die Fußpunkte nicht als axiale Gelenke mit zueinander parallelen Schwenkachsen ausgebildet, sondern weisen die Form von Kardangelenken auf, wobei selbstverständlich alle kinematisch damit gleichwertigen Gelenke verwendet werden können. Das Verkippen der parallelkinematischen Vorrichtung 906 und damit der beweglichen Plattform 903 um die aus den drei fluchtend angeordneten Fußpunkten gebildete Kippachsachse 916 wird durch einen Aktuator A3 bewerkstelligt.

Der Kopfpunkt K3 des Aktuators A3 ist dabei passenderweise am Stab S1 vorgesehen, bildet somit einen Pseudotripelpunkt, sodass der Stab S1 je nach Betrachtungsweise als Teil des Kraftecks, gebildet aus dem Stab S1 und dem Aktuator A1, oder als Teil des Kraftecks, gebildet aus dem Stab S1 und dem Aktuator A3, angesehen werden kann. Selbstverständlich ist es möglich, den Kopfpunkt K3 gemeinsam mit dem Kopfpunkt K1 als echten Tripelpunkt auszubilden. Die Kopfpunkte sind wiederum drehbar um Achsen 917, bzw. 917' in der beweglichen Plattform 903 gelagert.

Weder von der Berechnung und Steuerung der Bewegung her, noch von der dynamischen oder statischen Belastung her bringt diese kombinierte Konstruktion Schwierigkeiten, die Einleitung von Biegekräften in den Stab S 1 ist mechanisch leicht beherrschbar. Auch wird die Zugänglichkeit und Überprüfbarkeit der Vorrichtung durch diese vielfachen Bewegungsfreiheiten nicht eingeschränkt, speziell zu erwähnen ist, dass durch diese Weiterbildung die Masse der beweglichen Plattform 903 samt Arm 913 und Werkzeugträger 907 keine Änderung erfahrt, was bei seriellen Robotern undenkbar ist.

Die Fig. 31 zeigt einen noch ausgeprägter beweglichen Roboter 901, der aus einer Kombination des Roboters gemäß den Figuren 28, 29 mit einem Roboter gemäß der Fig. 30 besteht, wobei jedoch dessen Aktuator A3 durch einen Stab S2 mit fester Länge ersetzt ist, sodass dieser Roboter nur über das aus dem Stab S 1 und dem Aktuator A1 gebildete Krafteck verfügt. Zufolge der konstanten Längen der Stäbe S1, S2 ist es durchaus möglich, diese beiden Stäbe samt ihren Fußpunkten durch ein flächiges Gebilde zu ersetzen, das um eine Achse 915 der festen Plattform 5 schwenkbar ausgebildet ist.

Die Erfindung ist nicht auf das dargestellte Ausführungsbeispiel beschränkt sondern kann selbstverständlich verschiedentlich abgewandelt werden. So können andere Kombinationen von Stäben mit Aktuatoren zu einem Krafteck im Sinne der Erfindung zusammengefasst werden, es können die Fußpunkte anders als dargestellt auf der festen Plattform 902 angeordnet werden, wenn auch die dargestellte möglichst orthogonalisierte und in Unterkombinationen der Fußpunkte fluchtende Anordnung vorteilhaft ist.

Dies auch dort, wo sie nicht kinematisch notwendig ist, beispielsweise weil die Einschränkung von Freiheitsgraden durch die Ausgestaltung der Lager erfolgt (Achsen 915 in Fig. 29), weil dies Vorteile bei der Berechnung und der Überschaubarkeit der parallelkinematischen Vorrichtung mit sich bringt und zumeist auch in der Fertigung günstiger ist, da beim Herstellungsprozess ein Umspannen der festen Plattform oder die Verwendung komplexer Teilungsvorrichtung vermieden wird.

Selbstverständlich ist es auch möglich, die dargestellten parallelkinematischen Vorrichtungen durch eine Kombination von Stäben mit Aktuatoren, die als Seile ausgebildet sind oder nur durch Seile zu erreichen, wenn die Belastung derartig ist, dass in den als Seilen ausgebildeten Elementen keine Druckbelastungen auftreten können.

Als Aktuatoren können pneumatische oder hydraulische Zylinder-Kolben-Einheiten verwendet werden oder es können elektrisch oder pneumatisch betriebene Spindelantriebe verwendet werden, auch Kugelumlaufspindeln und elektrische Linearantriebe sind je nach Anwendungsgebiet einsetzbar.

Bei der Auswahl der Antriebe spielt natürlich die Länge des Arbeitsbereiches des Aktuators, seine Belastung und sein Umfeld eine Rolle, für den Fachmann auf dem Gebiet der Herstellung von Handhabungsautomaten bzw. Kränen bzw. parallelkinematischen Vorrichtung allgemein können die passenden Antriebe in Kenntnis der Erfindung je nach dem Anwendungsgebiet leicht bestimmt werden.

### Anwendung der Erfindung auf besonders torsionsstabile Varianten mit geringen und über dem Bewegungsweg weitgehend linearen Antriebskräften:

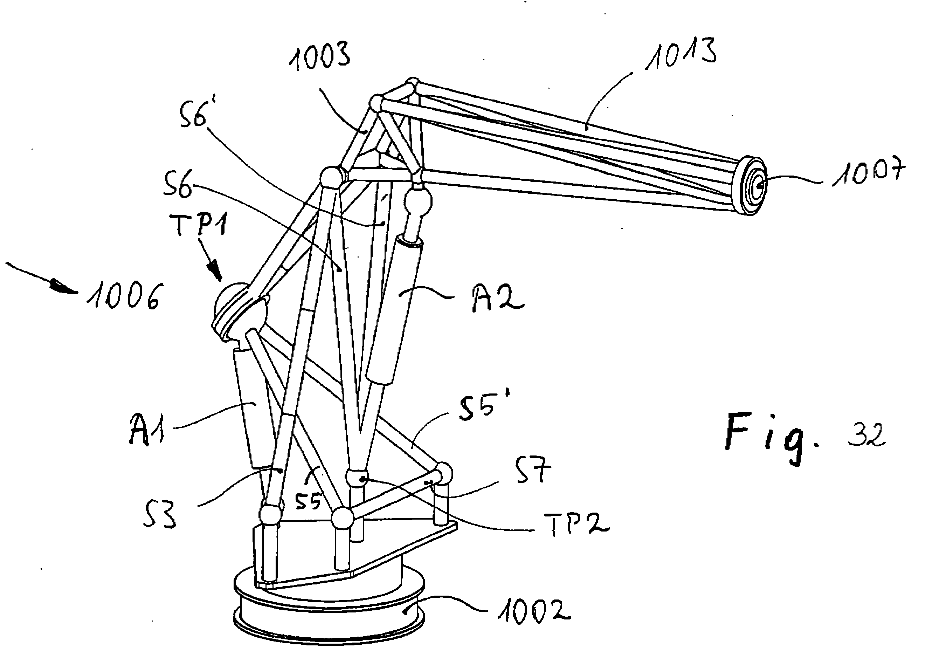

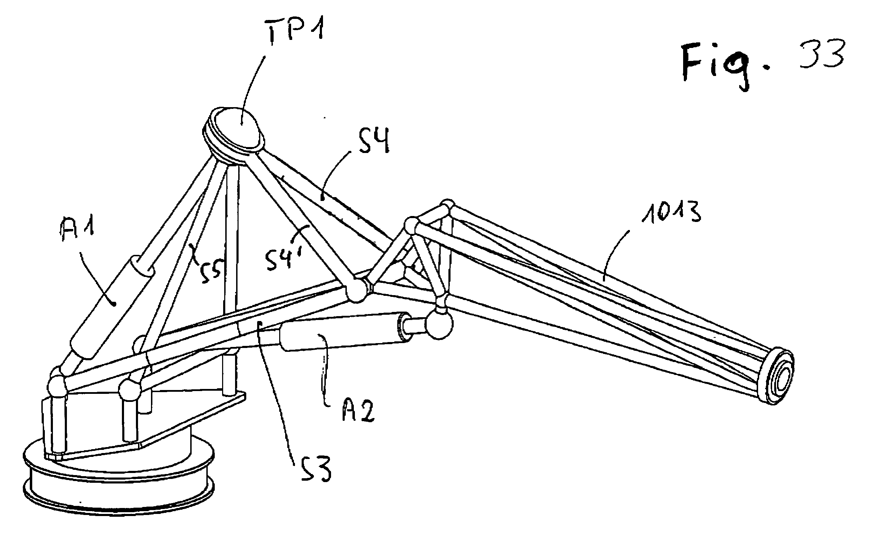

Die Fig. 32-35 zeigen eine besonders torsionssteife und dabei leichte Roboter- oder Krankonstruktion die folgenden Aufbau aufweist:
Auf einer, gegebenenfalls um eine Hochachse drehbaren oder entlang einer (nicht dargestellten) Fahrbahn verfahrbaren festen Plattform 1002 sind, symmetrisch zu einer Mittelebene der Vorrichtung 1006 zwei Stäbe S5, S5' gelenkig angelenkt und bilden mit ihren Kopfpunkten gemeinsam mit dem Kopfpunkt eines in der Symmetrieebene liegenden, in dieser aber um seinen Fußpunkt verschwenkbaren Aktuator A1 einen Tripelpunkt TP1 aus. Von einem an der festen Plattform in der Symmetrieebene liegenden, als Tripelpunkt ausgebildeten Fußpunkt TP2 führen zwei Stäbe fester Länge, S6 und symmetrisch dazu S6', zu zwei Anlenkpunkte der beweglichen Plattform 1003. Ein in der Symmetrieebene der Vorrichtung liegender Aktuator A2 führt vom Tripelpunkt TP2 ebenfalls zu einem Angriffpunkt auf der beweglichen Plattform 1003. Die bewegliche Plattform 1003 ist im dargestellten Ausführungsbeispiel als räumliches Stabwerk aufgebaut, wodurch die Montage von Werkzeugen, Messsonden, Greifern, Seilzeugen etc. erleichtert und das Gewicht gering gehalten wird. Mit zur beweglichen Plattform 1003 gehört ein ebenfalls als Stabwerk ausgebildeter Arm 1013 mit einem schematisch an seinem freien Ende angedeuteten Werkzeugträger 1007.

Die beiden Kopfpunkte der Stäbe S6 und S6' an der beweglichen Plattform 1003 sind als Doppelpunkte ausgebildet und mittels Stäben S4, S4' mit dem Tripelpunkt TP1 verbunden. Dieser erscheint in der Zeichnung auf den ersten Blick als Mündungspunkt von fünf Stäben, doch muss bedacht werden, dass die Stäbe S5, S5' einerseits und die Stäbe S4, S4' andererseits sich jeweils wie ein starrer Körper bewegen und daher nicht doppelt gerechnet werden dürfen.

Weiters weist die Vorrichtung nach den Fig. 32-35 einen asymmetrisch verlaufenden Stab S3 auf, der im dargestellten Ausführungsbeispiel von einem der Anlenkpunkte an der beweglichen Plattform 1003 zu einem eigenen Fußpunkt außerhalb der Symmetrieebene an der festen Plattform 1002 führt und der die Lage der geschilderten Konstruktion symmetrisch zur Symmetrieebene sichert.

Weiters ist im dargestellten Ausführungsbeispiel ersichtlich, dass die Fußpunkte der Stäbe S5 und S5' mittels eines Stabes S7 miteinander verbunden sind, dieser dient nur der Übernahme von Querkräften, die durch die dreieckige Ausbildung der Stäbe S5, S5' auftreten.

Die Darstellung der Fuß- und Kopfpunkte erfolgt, wie bei allen die Kinematiken in ihrer Gesamtheit zeigenden Darstellungen dieser Beschreibung, rein schematisch, die reale Ausbildung dieser Punkte kann den verschiedenen Ausführungsformen, wie sie eingangs der Beschreibung erläutert worden sind, oder auch den Beispielen, die in den Fig. 28-31 angegeben sind, entnommen werden.

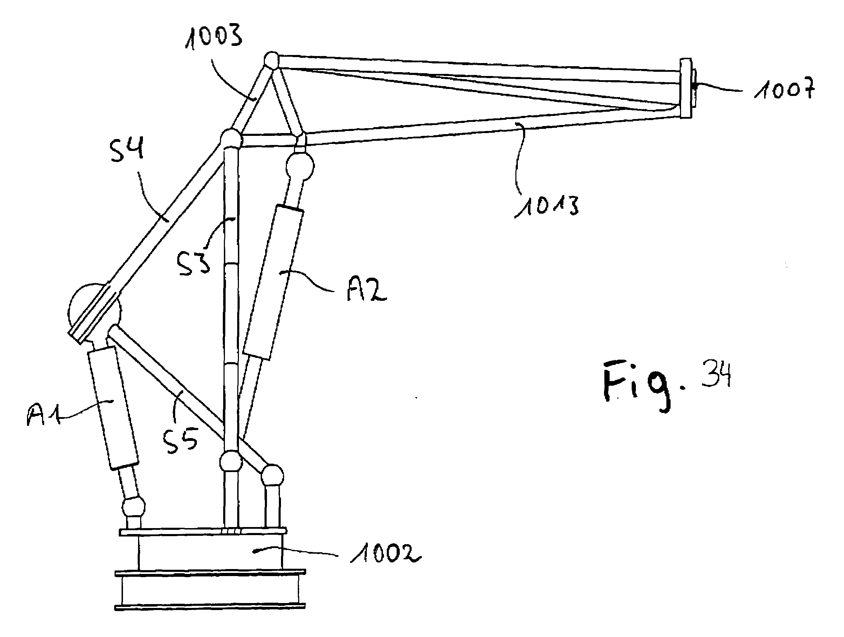

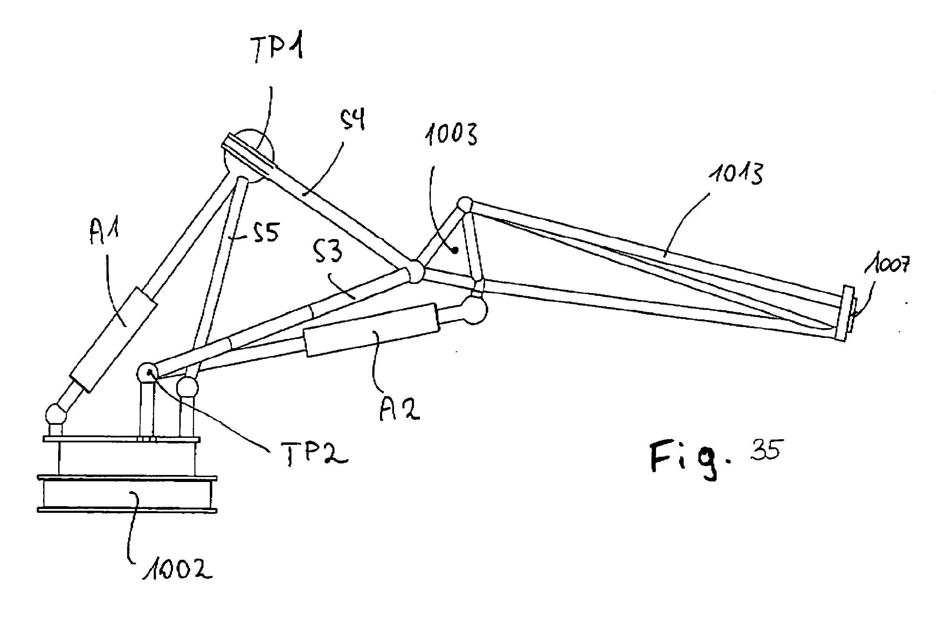

Einem Vergleich der Fig. 34 und 35 ist der große Aktionsradius bei diesem einfachen Aufbau zu entnehmen, bei dieser rein seitlichen Darstellung ist zu beachten, dass der Stab S3 die Stäbe S6, S6' verdeckt. Es ist daher die Einzeichnung des Bezugszeichens TP2 in Fig. 35 so zu verstehen, dass die Bezugslinie zum verdeckten Fußpunkt führt.

Es ist die Erfindung nicht auf die dargestellten und beschriebenen Beispiele beschränkt, sondern kann auf unterschiedliche Weise auf eine große Anzahl von Anwendungsgebieten transferiert werden. Dabei sind selbstverständlich auch Kombinationen mit Vorrichtungen, wie sie eingangs erläutert wurden, möglich, beispielsweise auf dem Gebiet der Mikromanipulatoren oder auf dem Gebiet der Medizintechnik im Kleinen, bei Kränen und Erdbewegungsmaschinen im Großen.

## Patentansprüche

1. Kinematische Verbindung einer festen Plattform (902) mit einer beweglichen Plattform (903) mit bis zu sechs Freiheitsgraden in geschlossenen kinematischen Ketten, sogenannte Parallelkinematik, mit Verbindungselementen_{,} die sowohl mit der festen als auch mit der beweglichen Plattform durch Gelenke verbunden sind, und entweder Aktuatoren: Stäbe veränderlicher Länge (A1, A2, A3) bzw. Stäbe konstanter Länge mit veränderlicher Lage ihres Fußpunktes, oder passive Stäbe: Stäbe konstanter Länge mit fest auf der festen Plattform angeordneten Fußpunkten (S1), sind, wobei drei dieser Verbindungselemente, davon mindestens ein Aktuator und mindestens ein passiver Stab, in Form eines Pseudo-Tripelpunktes (K1-K3) an der beweglichen Plattform (903) angreifen, wobei der Pseudo-Tripelpunkt einer der folgenden Definitionen genügt:
a) Es greift jedes der drei Verbindungselemente für sich an der beweglichen Plattform an;
b) Es greifen zwei der Verbindungselemente benachbart an der beweglichen Plattform an, das dritte Verbindungselement an einem der beiden Verbindungselemente ;
c) Es greifen zwei der Verbindungselemente gemeinsam an einem Punkt der beweglichen Plattform an, das dritte Verbindungselement an einem der beiden Verbindungselemente ;
d) Es greift ein Verbindungselement an einem Punkt der beweglichen Plattform an, das zweite Verbindungselement an diesem Verbindungselement und das dritte Verbindungselement am zweiten Verbindungselement ;
e) Es greift ein Verbindungselement an einem Punkt der beweglichen Plattform an, das zweite Verbindungselement an diesem Verbindungselement und das dritte Verbindungselement am ersten Verbindungselement ;
f) Es greifen alle drei Verbindungselemente an einem Punkt der beweglichen Plattform an; jeweils mit der Maßgabe, dass der größte Abstand zwischen den Angriffspunkten der den Pseudo-Tripelpunkt bildenden Verbindungselemente kleiner ist als 20 % der kürzesten Länge des kürzesten am Pseudo-Tripelpunkt angreifenden Verbindungselementes.

2. Kinematische Vorrichtung nach Anspruch 1, **dadurch** gekenntzeichnet, dass die Fußpunkte des mindestens einen Stabes (S1) und des mindestens einen Aktuators (A1) nur eine Verschwenkung der beiden Elemente (A1, S1) um zueinander parallele Achsen (915) zulassen, die normal zur Ebene der beiden Elemente (A1, S1) verlaufen.

3. Kinematische Vorrichtung nach Anspruch 1, **dadurch gekennzeichnet, dass** ein gemeinsamer Kopfpunkt (K1) des mindesten einen Stabes (S1) und des mindesten einen Aktuators (A1) nur eine Verschwenkung der beweglichen Plattform (903) um eine Achse (912) zulässt, die normal zur Ebene der beiden Elemente (A1, S1) verlauft.

4. Kinematische Vorrichtung nach Anspruch 3, **dadurch gekennzeichnet, dass** die Lage der beweglichen Plattform (903) bezüglich des Kopfpunktes (K1) durch einen Aktuator (A2) festgelegt wird.

5. Kinematische Vorrichtung nach einem der Ansprüche 3 oder 4, **dadurch gekennzeichnet, dass** am Kopfpunkt (K1) oder nahe (K3) des Kopfpunkts (K1) ein weiterer Stab (S2) oder Aktuator (A3) angreift.

6. Kinematische Vorrichtung nach einem der Ansprüche 1 bis 5, **dadurch gekennzeichnet, dass** der größte Abstand zwischen den Angriffspunkten der den Pseudo-Tripelpunkt bildenden Verbindungselemente kleiner ist als 10 % der kürzesten Länge des kürzesten am Pseudo-Tripelpunkt angreifenden Verbindungselementes.

## Claims

1. Kinematic connection between a fixed platform (902) and a movable platform (903) with up to six degrees of freedom in closed kinematic chains, so-called parallel kinematics, having connecting elements which are connected both to the fixed platform and to the movable platform by means of articulations, and are either actuators: variable-length rods (A1, A2, A3) or constant-length rods with a variable base-point position, or passive rods: constant-length rods with base points (S1) fixed on the fixed platform, wherein three of said connecting elements, including at least one actuator and at least one passive rod, engage on the movable platform (903) in the form of a pseudo triple point (K1-K3), wherein the pseudo triple point satisfies one of the following definitions:
a) each of the three connecting elements itself engages on the movable platform;
b) two of the connecting elements engage adjacently on the movable platform, and the third connecting element engages on one of the two connecting elements;
c) two of the connecting elements engage together at a point of the movable platform, and the third connecting element engages on one of the two connecting elements;
d) one connecting element engages at a point of the movable platform, the second connecting element engages on said connecting element, and the third connecting element engages on the second connecting element;
e) one connecting element engages at a point of the movable platform, the second connecting element engages on said connecting element, and the third connecting element engages on the first connecting element;
f) all three connecting elements engage at a point of the movable platform;
in each case with the proviso that the greatest distance between the points of engagement of the connecting elements forming the pseudo triple point is smaller than 20% of the shortest length of the shortest connecting element engaging on the pseudo triple point.

2. Kinematic arrangement according to Claim 1, **characterized in that** the base points of the at least one rod (S1) and of the at least one actuator (A1) allow only pivoting of the two elements (A1, S1) about parallel axes (915) which run normal to the plane of the two elements (A1, S1).

3. Kinematic arrangement according to Claim 1, **characterized in that** a common top point (K1) of the at least one rod (S1) and of the at least one actuator (A1) allows only pivoting of the movable platform (903) about an axis (912) which runs normal to the plane of the two elements (A1, S1).

4. Kinematic arrangement according to Claim 3, **characterized in that** the position of the movable platform (903) in relation to the top point (K1) is defined by an actuator (A2).

5. Kinematic arrangement according to either of Claims 3 and 4, **characterized in that** a further rod (S2) or actuator (A3) engages at the top point (K1) or in the vicinity (K3) of the top point (K3).

6. Kinematic arrangement according to one of Claims 1 to 5, **characterized in that** the greatest distance between the points of engagement of the connecting elements forming the pseudo triple point is smaller than 10% of the shortest length of the shortest connecting element engaging on the pseudo triple point.

## Revendications

1. Liaison cinématique d'une plateforme fixe (902) avec une plateforme mobile (903) possédant jusqu'à six degrés de liberté dans des chaînes cinématiques fermées, aussi appelée cinématique parallèle, avec des éléments de liaison qui sont reliés aussi bien à la plateforme fixe qu'à la plateforme mobile par des articulations et sont soit des actionneurs : tiges de longueur variable (A1, A2, A3) ou tiges de longueur constante avec position variable de leur pied, soit des tiges passives : tiges de longueur constante avec pieds (S1) disposés de manière fixe sur la plateforme fixe, trois de ces éléments de liaison, dont au moins un actionneur et au moins une tige passive, agissant sous la forme d'un pseudo point triple (K1-K3) sur la plateforme mobile (903), le pseudo point triple satisfaisant à l'une des définitions suivantes :
a) chacun des trois éléments de liaison agit pour soi sur la plateforme mobile ;
b) deux des éléments de liaison agissent en voisinage sur la plateforme mobile, le troisième élément de liaison agit sur un des deux éléments de liaison ;
c) deux des éléments de liaison agissent en commun sur un point de la plateforme mobile, le troisième élément de liaison agit sur un des deux éléments de liaison ;
d) un élément de liaison agit sur un point de la plateforme mobile, le deuxième élément de liaison sur cet élément de liaison et le troisième élément de liaison sur le deuxième élément de liaison ;
e) un élément de liaison agit sur un point de la plateforme mobile, le deuxième élément de liaison sur cet élément de liaison et le troisième élément de liaison sur le premier élément de liaison ;
f) les trois éléments de liaison agissent sur un point de la plateforme mobile ; chaque fois à la condition que la plus grande distance entre les points d'attaque des éléments de liaison formant le pseudo point triple soit inférieure à 20 % de la plus courte longueur du plus court des éléments de liaison agissant sur le pseudo point triple.

2. Dispositif cinématique selon la revendication 1, **caractérisé en ce que** les pieds de ladite au moins une tige (S1) et dudit au moins un actionneur (A1) permettent seulement un pivotement des deux éléments (A1, S1) autour d'axes (915) parallèles l'un à l'autre qui s'étendent perpendiculairement au plan des deux éléments (A1, S1).

3. Dispositif cinématique selon la revendication 1, **caractérisé en ce qu'**une tête commune (K1) de ladite au moins une tige (S1) et dudit au moins un actionneur (A1) permet seulement un pivotement de la plateforme mobile (903) autour d'un axe (912) qui s'étend perpendiculairement au plan des deux éléments (A1, S1).

4. Dispositif cinématique selon la revendication 3, **caractérisé en ce que** la position de la plateforme mobile (903) par rapport à la tête (K1) est fixée par un actionneur (A2).

5. Dispositif cinématique selon une des revendications 3 ou 4, **caractérisé en ce qu'**une autre tige (S2) ou un autre actionneur (A3) agit sur la tête (K1) ou à proximité (K3) de la tête (K1).

6. Dispositif cinématique selon une des revendications 1 à 5, **caractérisé en ce que** la plus grande distance entre les points d'attaque des éléments de liaison formant le pseudo point triple est inférieure à 10 % de la plus courte longueur du plus court élément de liaison agissant sur le pseudo point triple.
